# EUROPÄISCHE PATENTSCHRIFT

(11) **EP 3 977 371 B1**
(45) Veröffentlichungstag und Bekanntmachung des Hinweises auf die Patenterteilung: **12.02.2025**
(21) Anmeldenummer: 20729729.2
(22) Anmeldetag: 29.05.2020
(51) Int. Cl.: G06Q 10/02, G06Q 20/32, G06Q 20/04

(54) **VERFAHREN UND KONTROLLGERÄT ZUR SICHEREN ÜBERPRÜFUNG EINES ELEKTRONISCHEN TICKETS**
METHOD AND CONTROL DEVICE FOR SECURELY CHECKING AN ELECTRONIC TICKET
PROCÉDÉ ET APPAREIL DE CONTRÔLE PERMETTANT LA VÉRIFICATION SÛRE D'UN BILLET ÉLECTRONIQUE

(30) Priorität: 03.06.2019 DE 102019114844
(43) Veröffentlichungstag der Anmeldung: 06.04.2022
(73) Patentinhaber: VDV Eticket Service GmbH & Co. KG, 50670 Köln (DE)
(72) Erfinder: LUTGEN, Joseph, 50670 Köln (DE)
(74) Vertreter: dompatent von Kreisler Selting Werner - Partnerschaft von Patent- und Rechtsanwälten mbB
(86) Internationale Anmeldenummer: PCT/EP2020/064974
(87) Internationale Veröffentlichungsnummer: WO 2020/245043

(56) Entgegenhaltungen:
- EP-A1- 1 750 220
- DE-A1- 102010 017 861

## Beschreibung

Die vorliegende Erfindung betrifft ein Verfahren zur sicheren Überprüfung eines elektronischen Tickets und ein entsprechendes Kontrollgerät für die sichere Überprüfung.

Immer mehr Verbraucher entscheiden sich dazu, insbesondere Bus- und Bahntickets, aber auch Tickets für Konzerte und andere Events, online zu erwerben. Beim Online-Erwerb hat der Verbraucher meistens die Wahl, sich das erworbene Ticket per Post oder per E-Mail zusenden zu lassen. Alternativ hierzu hat er häufig auch die Möglichkeit, das Ticket direkt auf sein Smartphone zu übertragen.

Bei den beiden Varianten, bei denen das Ticket per E-Mail zugestellt oder direkt auf das Smartphone des Verbrauchers übertragen wird, spricht man im Allgemeinen von elektronischen Tickets.

Falls der Verbraucher eine Zusendung per E-Mail wünscht, wird ihm das Ticket häufig im PDF-Format zugestellt. Die Ticketdaten sind dann in der Regel in Form eines Barcodes hinterlegt, sodass diese durch ein Kontrollgerät einfach und schnell auslesbar sind. Gegebenenfalls sind die Ticketdaten zusätzlich als Klartext dargestellt.

Entscheidet sich der Verbraucher für eine direkte Übertragung des Tickets auf sein Smartphone, so werden die Ticketdaten über eine entsprechende App direkt auf sein Smartphone geladen. Diese Variante ist insbesondere bei Bahntickets sehr beliebt. Beispielsweise bietet die Deutsche Bahn AG eine entsprechende App (auch bekannt als DB Navigator), in der die elektronischen Tickets eines Fahrgastes hinterlegt werden können.

Sobald ein elektronisches Ticket kontrolliert werden soll, werden nach dem bisherigen Stand der Technik die Daten, die häufig in Form eines 2D-Barcodes (oft als Aztec-Code) hinterlegt sind, durch ein Kontrollgerät eines Kontrolleurs ausgelesen. Der Kontrolleur erhält dann in kürzester Zeit alle relevanten Informationen zum elektronischen Ticket, wie beispielsweise den Namen des Fahrgastes, die gebuchte Fahrstrecke, das gebuchte Verkehrsmittel (bspw. Regionalexpress oder ICE), die gebuchte Klasse (1. oder 2. Klasse), den gegebenenfalls gebuchten Sitzplatz, BahnCard-Optionen, etc.

Der Kontrolleur kann auf diese Weise in kürzester Zeit überprüfen, ob ein Fahrgast das "richtige" Ticket gebucht hat und damit eine vermeintlich zulässige Berechtigung zur Nutzung des gewählten Verkehrsmittels besitzt.

Allerdings kann der Kontrolleur nach dem vorstehend beschriebenen Verfahren nur bedingt überprüfen, ob es sich bei dem Ticket um ein Original oder um eine Fälschung bzw. eine Kopie handelt und ob der Fahrgast auch tatsächlich zur Nutzung des gewählten Verkehrsmittels berechtigt ist.

Daher gibt es heutzutage bereits verschiedene Ansätze, die Tickets fälschungssicher zu gestalten. Häufig enthalten die heutigen elektronischen Tickets zur Erhöhung der Sicherheit zusätzliche Prüfbits, die mittels eines Algorithmus aus den Ticketdaten gebildet werden. Sofern ein Betrüger versuchen sollte, die elektronischen Ticketdaten zu manipulieren, beispielsweise indem er die Informationen zur gebuchten Fahrstrecke ändert, kann der Kontrolleur beziehungsweise dessen Kontrollgerät die Manipulation der Ticketdaten erkennen.

Während der vorstehend beschriebene Mechanismus vor unberechtigter Manipulation der Ticketdaten schützt, verhindert er nicht, dass ein Betrüger das gesamte elektronische Ticket kopiert. Hierzu könnte dieser beispielsweise den zu einem elektronischen Ticket gehörenden Barcode per Screenshot kopieren und diesen Screenshot auf ein oder mehrere weitere Smartphones übertragen. Um diesem Problem vorzubeugen, werden die meisten elektronischen Tickets heutzutage personalisiert ausgestellt. Der Kontrolleur kann daher, zusätzlich zur Überprüfung des elektronischen Tickets, auch noch die Personaldaten des Fahrgastes überprüfen und den Fahrgast auffordern, sich auszuweisen. Sofern der ausgewiesene Name des Fahrgastes, mit dem im elektronischen Ticket hinterlegten Namen identisch ist, wird der Fahrgast als berechtigt angesehen. Während das vorstehend beschriebene Verfahren zur Überprüfung elektronischer Tickets in Kombination mit der Überprüfung der Personaldaten als relativ sicher angesehen werden kann, ist das beschriebene, zweistufige Überprüfungsverfahren (Überprüfung der Ticketdaten und der Personaldaten) in der Praxis recht zeitaufwendig und daher sowohl bei den Nutzern, als auch bei den Kontrolleuren sehr unbeliebt. Darüber hinaus ist das zweistufige Überprüfungsverfahren in einigen Fällen praktisch überhaupt nicht durchführbar, wenn zum Beispiel ein Nutzer behauptet, keinen Ausweis mit sich zu führen.

Auch wenn das elektronische Ticket innerhalb weniger Sekunden automatisch ausgelesen werden kann, ist gerade die zusätzliche manuelle Überprüfung des Personalausweises bzw. des Reisepasses des Fahrgastes relativ umständlich. Häufig hat der Fahrgast nur sein elektronisches Ticket parat, jedoch nicht seine Ausweisdokumente. Dies führt dazu, dass die Prüfung der Personaldaten eines einzelnen Fahrgastes mitunter 1 Minute oder sogar noch länger dauern kann. Bei mehreren 100 Fahrgästen, deren Tickets überprüft werden soll, führt dies zu einem nicht unwesentlichen Aufwand.

Folglich müsste der Bahnbetreiber zur Gewährleistung einer vollständigen und gründlichen Überprüfung sämtlicher Fahrberechtigungen zusätzliches Kontrollpersonal einstellen. Alternativ verzichtet er auf das zusätzliche Kontrollpersonal und nimmt eine lediglich oberflächliche Prüfung der Berechtigung der Fahrgäste in Kauf, indem er etwa auf die Überprüfung der Personaldaten teilweise oder vollständig verzichtet.

In der Praxis führt dieser Umstand dazu, dass häufig nur die elektronischen Tickets überprüft werden und nicht zusätzlich auch noch die Personaldaten des Fahrgastes. Dieser Ansatz ist jedoch unbefriedigend, da er für den Betreiber keine ausreichende Sicherheit vor Betrügern bietet.

In EP 1 750 220 A1 ist ein Verfahren zur Erstellung und automatisierten Überprüfung von elektronischen Tickets offenbart. Bei diesem Verfahren werden Benutzerdaten in eine Benutzerdatenbank eines Ticket-Servers abgespeichert und Diensterbringungsdaten werden in einer Dienstdatenbank des Ticket-Servers abgespeichert. Mittels des Ticket-Servers wird ein elektronisches Ticket erstellt und auf dem Mobilendgerät des Benutzers abgespeichert, wobei das elektronische Ticket auf Benutzerdaten der Benutzerdatenbank und/oder auf Diensterbringungsdaten der Dienstdatenbank basiert. Zudem wird auf einem Mobilendgerät eines Kontrolleurs ein elektronischer Kontrollschlüssel zur Überprüfung des elektronischen Tickets abgespeichert und das auf dem Mobilendgerät des Benutzers abgespeicherte elektronische Ticket wird durch das Mobilendgerät des Kontrolleurs überprüft. Die Überprüfung erfolgt mittels der Datenübertragung über eine NFC-Schnittstelle zwischen dem Mobilendgerät des Benutzers und dem Mobilendgerät des Kontrolleurs.

Ferner ist in DE 10 2010 017861 A1 ein Verfahren zur Handhabung von elektronischen Tickets beschrieben. Dabei wird das elektronische Ticket auf einem tragbaren Datenträger eines mobilen Benutzergeräts gespeichert. Bei diesem Verfahren wird das elektronische Ticket offline durch den tragbaren Datenträger des mobilen Benutzergeräts erzeugt.

Ausgehend von dem vorstehend beschriebenen Problem ist es Aufgabe der vorliegenden Erfindung, ein Verfahren und ein Kontrollgerät zur sicheren Überprüfung eines elektronischen Tickets, insbesondere eines elektronischen Bus- und/oder Bahntickets bereitzustellen. Eine zusätzliche Aufgabe der vorliegenden Erfindung ist es, dass das Verfahren zur sicheren Überprüfung effizient gestaltet ist.

Zur Lösung dieser Aufgabe wird ein Verfahren zur sicheren Überprüfung eines elektronischen Tickets gemäß dem unabhängigen Anspruch 1 vorgeschlagen. Weitere bevorzugte Ausführungsformen der vorliegenden Erfindung sind in den abhängigen Ansprüchen definiert. Bei dem erfindungsgemäßen Verfahren ist das elektronische Ticket auf einem ersten mobilen Endgerät, das einem Endverbraucher zugeordnet ist, hinterlegt und die Überprüfung des Tickets erfolgt durch ein zweites Endgerät, das einem Kontrolleur oder einem Kontrollsystem zugeordnet ist. Das erfindungsgemäße Verfahren umfasst dabei die nachfolgenden Schritte:
- Senden einer Anfragenachricht von dem zweiten Endgerät an das erste Endgerät über einen ersten Kommunikationskanal;
- Senden einer Antwortnachricht von dem ersten Endgerät an das zweite Endgerät über einen zweiten Kommunikationskanal, wobei die Antwortnachricht von dem ersten Endgerät signiert ist und wobei der zweite Kommunikationskanal entweder identisch mit dem ersten Kommunikationskanal ist oder sich von dem ersten Kommunikationskanal unterscheidet;
- Verifikation der signierten Antwortnachricht durch das zweite Endgerät; und
- Bestätigung der Authentizität der Antwortnachricht durch das zweite Endgerät, sofern zuvor die Authentizität der Signatur durch das zweite Endgerät verifiziert werden konnte.

Das erfindungsgemäße Verfahren und insbesondere die Signatur der Antwortnachricht durch das erste Endgerät bieten einen zusätzlichen Schutzmechanismus zum effizienten Schutz vor Betrügern. Das erste Endgerät, auf dem sich das elektronische Ticket befindet, wird nämlich durch das zweite Endgerät aufgefordert, eine Antwortnachricht zu versenden. Diese Antwortnachricht ist durch das erste Endgerät signiert. Die digitale Signatur, die der Antwortnachricht beigefügt wird, kann anschließend vom zweiten Endgerät überprüft werden. Bei der Generierung der digitalen Signatur wird ein privater Schlüssel des ersten Endgeräts verwendet. Die anschließende Überprüfung durch das zweite Endgerät erfolgt durch die Verwendung eines öffentlichen Schlüssels des ersten Endgeräts. Der öffentliche Schlüssel und der private Schlüssel des ersten Endgeräts bilden zusammen ein Schlüsselpaar und sind mathematisch miteinander gekoppelt. Schlüsselpaare sind im Allgemeinen aus der Kryptographie bekannt und werden bei asymmetrischen Verschlüsselungsverfahren eingesetzt. Die Generierung eines solchen Schlüsselpaars kann beispielsweise unter Verwendung eines Standard-Verfahrens der Elliptische-Kurven-Kryptographie oder unter Verwendung des RSA-Verfahrens erfolgen.

Der öffentliche Schlüssel kann beispielsweise ebenfalls in der Antwortnachricht enthalten sein. Alternativ kann es aber auch vorgesehen sein, dass der öffentliche Schlüssel des ersten Endgeräts in dem zweiten Endgerät hinterlegt ist, bzw. in einem Speichermedium, auf welches das zweite Endgerät über eine Netzwerkverbindung zugreifen kann. Da das zweite Endgerät über den öffentlichen Schlüssel des ersten Endgeräts verfügt bzw. Zugriff auf den öffentlichen Schlüssel hat, kann das zweite Endgerät überprüfen, ob die Signatur des ersten Endgeräts gültig ist oder nicht. Ist die Signatur ungültig, kann das zweite Endgerät daraus schließen, dass es sich um eine Fälschung bzw. um eine Kopie des elektronischen Tickets handelt.

Gemäß einer Ausführungsform des erfindungsgemäßen Verfahrens, kann das zweite Endgerät als ein mobiles Endgerät ausgeführt sein. Dies ist insbesondere dann vorteilhaft, wenn das erfindungsgemäße Verfahren beispielsweise in der Bahn eingesetzt werden soll. Alternativ hierzu kann es aber auch vorgesehen sein, dass das zweite Endgerät als ein stationäres Endgerät ausgeführt ist. Dies kann insbesondere dann gewünscht sein, wenn das erfindungsgemäße Verfahren im Zusammenhang mit einem Zugangskontrollsystem bzw. einem Zutrittssystem verwendet werden soll. Ein solches Zugangskontrollsystem kann beispielsweise elektronisch gesteuerte Zugangsschranken oder automatisch öffnende Zugangstüren aufweisen und eine automatische Kontrolle der elektronischen Tickets bzw. der Fahrberechtigung eines Verbrauchers durchführen.

Das erste Endgerät gemäß dem erfindungsgemäßen Verfahren kann vorzugsweise als ein Smartphone ausgeführt sein. Das zweite Endgerät kann dabei ebenfalls als ein Smartphone ausgeführt sein.

Zusätzlich zu dem Kontrollmechanismus, der durch das Senden der Anfragenachricht an das erste Endgerät und das Senden der signierten Antwortnachricht an das zweite Endgerät bereitgestellt wird, können vorzugsweise auch die Ticketdaten an das zweite Endgerät übertragen werden. Für die Übertragung der Ticketdaten gibt es verschiedene Alternativen. Beispielsweise kann vorgesehen sein, dass zunächst die Ticketdaten, die in einem 2D-Barcode hinterlegt sind, durch ein Display des ersten Endgeräts angezeigt werden. Das zweite Endgerät kann anschließend den 2D-Barcode auslesen und die Ticketdaten (insbesondere die Fahrstrecke, die gebuchte Klasse etc.) überprüfen. In diesem Zusammenhang kann von einer Übertragung der Ticketdaten über einen optischen Kommunikationskanal gesprochen werden. Anschließend kann das zweite Endgerät zur Überprüfung der Identität des Fahrgastes eine Anfragenachricht an das erste Endgerät senden und eine Bestätigung durch eine signierte Antwortnachricht anfordern.

Gemäß einer weiteren Ausführungsform des erfindungsgemäßen Verfahrens kann vorgesehen sein, dass die Ticketdaten innerhalb der Antwortnachricht übertragen werden. Somit erfolgt die gesamte Kontrolle bzw. die Kommunikation zwischen dem Kontrollgerät (zweites Endgerät) und dem Endgerät des Verbrauchers (erstes Endgerät) in insgesamt zwei Schritten (Senden der Anfragenachricht an das erste Endgerät und Senden der die Ticketdaten enthaltende Antwortnachricht an das zweite Endgerät). Die Ticketdaten können in diesem Fall beispielsweise entweder als 2D-Barcode oder aber auch in einem anderen Format (zum Beispiel im Textformat) hinterlegt sein.

Ferner kann gemäß einer Ausführungsform des erfindungsgemäßen Verfahrens vorgesehen sein, dass die Anfragenachricht eine Verifikationsnachricht aufweist. Die Verifikationsnachricht kann bspw. eine gemäß einem Zufallsalgorithmus bzw. einem Pseudo-Zufallsalgorithmus erzeugte Zeichenfolge (insbesondere ein zufällig erzeugter Text oder eine zufällig erzeugte Zahl) sein, die zuvor von dem zweiten Endgerät generiert wurde. Insbesondere kann dabei vorgesehen sein, dass das erste Endgerät nach Erhalt, der die Verifikationsnachricht enthaltende Anfragenachricht diese Verifikationsnachricht mit dem privaten Schlüssel verschlüsselt und anschließend eine verschlüsselte Darstellung der Verifikationsnachricht an das zweite Endgerät überträgt. Diese Übertragung erfolgt dann mittels der Antwortnachricht. Das zweite Endgerät kann im Anschluss die verschlüsselte Verifikationsnachricht unter Verwendung des öffentlichen Schlüssels des ersten Endgeräts entschlüsseln und dadurch überprüfen, ob das erste Endgerät tatsächlich über den ihm zugeordneten Schlüssel verfügt. Auf diese Weise kann die Sicherheit des erfindungsgemäßen Überprüfungsprüfungsverfahrens weiter erhöht werden, da ausgeschlossen wird, dass die Antwortnachricht bereits vor der Generierung der Verifikationsnachricht erzeugt wird. Die Verifikationsnachricht, die das zweite Endgerät generiert, kann insbesondere bei jedem Kontrollvorgang unterschiedlich sein. Dadurch wird es für einen Fälscher praktisch unmöglich, eine ihm vorliegende Antwortnachricht zu kopieren oder aus einer ihm bekannten Antwortnachricht eine Antwortnachricht zu rekonstruieren, die von dem zweiten Endgerät als gültige Antwortnachricht erkannt wird.

Gemäß der vorliegenden Erfindung ist vorgesehen, dass die Anfragenachricht eine Verifikationsnachricht aufweist, die eine durch das zweite Endgerät generierte Zufallszahl der Länge L enthält, wobei L >= 1 ist, und die Antwortnachricht eine mit einem privaten Schlüssel des ersten Endgeräts verschlüsselte Darstellung der durch das zweite Endgerät generierten Zufallszahl enthält. Beispielsweise kann vorgesehen sein, dass die Zufallszahl eine Länge von 64 Bit aufweist. Gemäß einer Ausführungsform des erfindungsgemäßen Verfahrens kann ferner vorgesehen sein, dass die Zufallszahl 128 Bit lang ist. Durch die Verwendung einer besonders langen Zufallszahl wird es besonders schwierig, das elektronische Ticket zu fälschen oder zu kopieren. Gemäß dieser Ausführungsform kann das erste Endgerät insbesondere keine Kopie einer zuvor durch ein anderes Endgerät generierten Antwortnachricht verwenden, sondern muss die Antwortnachricht, welche die verschlüsselte Darstellung der Zufallszahl enthält, selbst generieren. Andernfalls würde das zweite Endgerät feststellen, dass das erste mobile Endgerät im Besitz eines vermeintlich korrekten privaten Schlüssels ist, jedoch eine andere Zahl verschlüsselt hat, als die zuvor durch das zweite Endgerät generierte Zufallszahl.

Gemäß dem erfindungsgemäßen Verfahren ist zudem vorgesehen, dass die Antwortnachricht ein digitales Zertifikat enthält, das von dem Dienstleistungs-Provider, welcher das elektronische Ticket erstellt hat, oder einer vom Dienstleistungs-Provider als vertrauensvoll eingestuften Stelle (Vertrauensanker) stammt. Das digitale Zertifikat kann insbesondere als ein public-key-Zertifikat ausgeführt sein. Das digitale Zertifikat kann dabei einen öffentlichen Schlüssel aufweisen, der gemeinsam mit einem privaten Schlüssel des Dienstleistungs-Providers ein Schlüsselpaar bildet. Prinzipiell ist es möglich, dass der öffentliche Schlüssel in der Antwortnachricht enthalten ist und an das zweite Endgerät übertragen wird, dass der öffentliche Schlüssel auf einem Server hinterlegt ist oder dass der öffentliche Schlüssel auf dem Kontrollgerät gespeichert ist. Der Vertrauensanker (nachfolgend auch als eine vom Dienstleistungs-Provider als vertrauensvoll eingestufte Stelle bezeichnet) stellt fest, ob das erste mobile Endgerät als Host für die vertrauenswürdige Client-Anwendung geeignet ist. Ist dies der Fall, so stattet sie das mobile Endgerät mit einer eindeutigen ID, einem Schlüssel und einem Zertifikat bzw. Prüf-Code aus. Der Prüf-Code ist für alle autorisierte Teilnehmer im System einfach und offline prüfbar und bestätigt die Vertrauenswürdigkeit der Client-Anwendung.

Das digitale Zertifikat kann insbesondere Informationen zu dem Herausgeber des Zertifikats und dem Zertifikatsempfänger beinhalten. Auch kann das digitale Zertifikat Angaben zur verwendeten Hash-Funktion enthalten. Beispielsweise kann in dem digitalen Zertifikat hinterlegt sein, dass das erste Endgerät als Hash-Funktion SHA-1 oder SHA-256 verwendet.

Das zweite Endgerät kann durch die im digitalen Zertifikat enthaltenen Daten überprüfen, ob der Besitzer des ersten Endgeräts tatsächlich legitimiert ist, das elektronische Ticket zu verwenden. Das digitale Zertifikat kann zudem unter Verwendung eines privaten Schlüssels des Dienstleistungs-Providers signiert sein. Der zu dem privaten Schlüssel gehörige öffentliche Schlüssel des Dienstleistungs-Providers kann dabei auf dem zweiten Endgerät oder auf einem über eine Netzwerkverbindung erreichbaren Speicher hinterlegt sein. Dadurch kann das zweite Endgerät verifizieren, ob das Zertifikat tatsächlich von dem Dienstleistungs-Provider erstellt wurde. Zudem kann das digitale Zertifikat Informationen betreffend die Gültigkeitsdauer des Zertifikats aufweisen. Beispielsweise kann das digitale Zertifikat das Datum, an dem das Zertifikat erstellt wurde, sowie eine Gültigkeitsdauer (z. B. 3 Monate) enthalten. Das zweite Endgerät kann dadurch überprüfen, ob das Zertifikat zum Zeitpunkt der Überprüfung des elektronischen Tickets noch gültig ist. Ist das Zertifikat nicht mehr gültig, kann das zweite Endgerät daraus schließen, dass der Besitzer des ersten Endgeräts nicht dazu berechtigt ist, dass auf dem ersten Endgerät hinterlegte Ticket zu verwenden.

Auch ist bei dem erfindungsgemäßen Verfahren vorgesehen, dass
- die Antwortnachricht das elektronische Ticket aufweist, das neben den Ticketinformationen auch einen ersten digitalen Identifikator des ersten Endgeräts aufweist, und dass das elektronische Ticket eine digitale Signatur des Dienstleistungs-Providers enthält;
- die Antwortnachricht zusätzlich zum elektronischen Ticket einen durch das erste Endgerät erzeugten zweiten digitalen Identifikator des ersten Endgeräts aufweist; und
- das zweite Endgerät die Authentizität der Antwortnachricht nur dann bestätigt, wenn der in dem elektronischen Ticket enthaltene erste Identifikator und der durch das erste Endgerät erzeugte zweite Identifikator identisch sind.

Bei den Identifikatoren (ID) kann insbesondere ein digitaler Fingerabdruck des ersten Endgeräts zum Einsatz kommen. Insbesondere kann dabei ein Hardware-Fingerabdruck oder ein Software-Fingerabdruck des ersten Endgeräts verwendet werden. Ein digitaler Fingerabdruck ermöglicht eine eindeutige Erkennung eines Endgeräts. Ein Hardware-Fingerabdruck kann beispielsweise eine Prozessor-ID, eine Arbeitsspeicher-ID und/oder eine Grafikchip-ID aufweisen. Auch kann der digitale Fingerabdruck jeweils aus den vorstehend genannten IDs zusammengesetzt oder aus diesen berechnet sein. Bei dieser Ausführungsform des erfindungsgemäßen Verfahrens kann insbesondere vorgesehen sein, dass bei der Registrierung des Endverbrauchers beim Dienstleistungs-Provider bzw. beim Erwerb des elektronischen Tickets die ID des ersten Endgeräts abgefragt oder ausgelesen wird. Hierzu kann beispielsweise eine Applikation auf dem ersten Endgerät vorgesehen sein (vertrauenswürdige Client-Anwendung), die diese ID ausliest bzw. generiert. Hierzu kann beispielsweise eine Hardware-ID (zum Beispiel die CPU-Seriennummer oder die Arbeitsspeicher-Seriennummer) ausgelesen und an den Dienstleistungs-Provider weitergeleitet werden, sodass anschließend das elektronische Ticket von dem Dienstleistungs-Provider personalisiert erstellt wird und das Ticket die Daten des Erwerbers und/oder die ID des Endgeräts (erster Identifikator) enthält. Auf diese Weise erfolgt eine Kopplung des Tickets mit dem Endgerät des Erwerbers. Die vertrauenswürdige Client-Anwendung schützt den privaten Schlüssel und Daten der Anwendung auf mobilen Endgeräten von Nutzern und wird zu diesem Zweck vom Vertrauensanker geprüft und autorisiert. Da das elektronische Ticket insbesondere auch durch den Dienstleistungs-Provider signiert ist, kann ein Unbefugter, der nicht im Besitz des privaten Schlüssels des Dienstleistungs-Providers ist, die Daten des elektronischen Tickets nicht manipulieren. So kann bei der Kontrolle das zweite Endgerät verifizieren, ob das überprüfte Ticket tatsächlich für das erste mobile Endgerät des Fahrgastes erstellt wurde, oder ob das Ticket für ein anderes Endgerät erstellt wurde und anschließend auf das nun kontrollierte erste Endgerät kopiert wurde. Bei der Kontrolle des elektronischen Tickets wird zusätzlich zu den im elektronischen Ticket enthaltenen Daten auch der Identifikator des ersten Endgeräts abgefragt. Beispielsweise kann dabei das zweite Endgerät eine Hardware-ID des ersten Endgeräts (zweiter Identifikator) auslesen. Anschließend kann das zweite Endgerät den ersten Identifikator und den zweiten Identifikator miteinander vergleichen. Nur wenn die beiden Identifikatoren miteinander identisch sind, wird die Authentizität der Antwortnachricht bestätigt. Auf diese Weise kann ein besonders sicheres Überprüfungsverfahren bereitgestellt werden. Mit dem so in der vertrauenswürdigen Client-Anwendung etablierten Schlüssel und der Signaturfunktion, kann ein Ticket-Ausgabesystem bzw. ein Kontrollgerät deren Vertrauenswürdigkeit sowie die Authentizität der eindeutigen ID selbst feststellen. Diese ID fügt das Ticket-Ausgabesystem in die Daten eines auszugebenden Tickets ein, bevor es diese Daten signiert und an die Client-Anwendung zurückschickt. Damit ist das Ticket an diese ID gebunden.

Gemäß einer weiteren Ausführungsform des erfindungsgemäßen Verfahrens kann vorgesehen sein, dass der Identifikator des ersten Endgeräts unabhängig von dem vorstehend beschriebenen Prinzip der Anfragenachricht und der Antwortnachricht zum Einsatz kommt. Anders ausgedrückt, wird zur Lösung der vorstehend genannten Aufgabe ein Verfahren zur sicheren Überprüfung eines elektronischen Tickets vorgeschlagen, wobei das elektronische Ticket auf einem ersten mobilen Endgerät, das einem Endverbraucher zugeordnet ist, hinterlegt ist und die Überprüfung des Tickets durch ein zweites Endgerät erfolgt, das einem Kontrolleur oder einem Kontrollsystem zugeordnet ist. Das erfindungsgemäße Verfahren umfasst dabei die nachfolgenden Schritte:
- Senden einer Prüfnachricht von dem ersten Endgerät an das zweite Endgerät über einen Kommunikationskanal, wobei die Prüfnachricht das elektronische Ticket aufweist, das neben den Ticketinformationen auch einen ersten digitalen Identifikator des ersten Endgeräts aufweist und das elektronische Ticket eine digitale Signatur des Dienstleistungs-Providers enthält;
- die Prüfnachricht zusätzlich zum elektronischen Ticket einen durch das erste Endgerät erzeugten zweiten digitalen Identifikator des ersten Endgeräts aufweist; und
- das zweite Endgerät die Authentizität der Prüfnachricht nur dann bestätigt, wenn der in dem elektronischen Ticket enthaltene erste Identifikator und der durch das erste Endgerät erzeugte zweite Identifikator identisch sind.

Ein Vorteil dieser Ausführungsform ist, dass die Sicherheit des erfindungsgemäßen Verfahrens weiter erhöht wird, da es nahezu ausgeschlossen ist, dass das elektronische Ticket, welches bevorzugt eine Signatur des Dienstleistungs-Providers enthält, manipuliert wird. Auch ist es nahezu ausgeschlossen, dass der Identifikator des ersten Endgeräts, bei dem es sich insbesondere um einen Hardware-ID handeln kann, manipuliert wird. Dabei wird der Identifikator des ersten Endgeräts vorzugsweise durch eine Applikation generiert, die von dem Dienstleistungs-Provider bereitgestellt wird. Daher ist es besonders schwierig, diese Applikation zu manipulieren, um einen gefälschten Identifikator zu übertragen.

Alternativ kann vorgesehen sein, dass das zweite Endgerät die Authentizität der Prüfnachricht nur dann bestätigt, wenn der im elektronischen Ticket enthaltene Identifikator und der im digitalen Zertifikat gespeicherte Identifikator identisch sind. Dadurch wird ein besonders sicheres Verfahren bereitgestellt, da sowohl die Manipulation des elektronischen Tickets, als auch die Manipulation des digitalen Zertifikats nahezu unmöglich sind.

Gemäß einer Ausführungsform der vorliegenden Erfindung umfasst das erfindungsgemäße Verfahren die nachfolgenden Schritte:
- Senden einer Prüfnachricht von dem ersten Endgerät an das zweite Endgerät über einen Kommunikationskanal, wobei die Prüfnachricht das elektronische Ticket aufweist, das neben den Ticketinformationen auch einen digitalen Identifikator des ersten Endgeräts aufweist und das elektronische Ticket eine digitale Signatur des Dienstleistungs-Providers enthält;
- die Prüfnachricht zusätzlich zum elektronischen Ticket ein digitales Zertifikat aufweist, das durch den Dienstleistungs-Provider signiert ist und das den digitalen Identifikator des ersten Endgeräts aufweist; und
- das zweite Endgerät die Authentizität der Prüfnachricht nur dann bestätigt, wenn der in dem elektronischen Ticket enthaltene Identifikator und der im digitalen Zertifikat enthaltene Identifikator identisch sind.

Ferner kann in einer alternativen Ausführungsform der vorliegenden Erfindung vorgesehen sein, dass das zweite Endgerät die Authentizität der Prüfnachricht nur dann bestätigt, wenn der im digitalen Zertifikat gespeicherte Identifikator und der durch das erste Endgerät erzeugte Identifikator identisch sind. Dadurch kann eine besonders hohe Sicherheit gewährleistet werden, da eine Manipulation des im digitalen Zertifikat gespeicherten Identifikators und des Identifikators des ersten Endgeräts nahezu unmöglich sind.

Insgesamt sind also prinzipiell drei verschiedene Möglichkeiten für die Überprüfung des Identifikators möglich (Vergleich der im Ticket gespeicherten ID mit der im digitalen Zertifikat hinterlegten ID, Vergleich der im Ticket gespeicherten ID mit der vom ersten Endgerät ausgelesenen ID, Vergleich der im digitalen Zertifikat hinterlegten ID mit der vom ersten Endgerät ausgelesenen ID), wobei jede Variante mit den genannten Vorteilen verbunden ist.

Des Weiteren kann bei dem erfindungsgemäßen Verfahren vorgesehen sein, dass die Antwortnachricht einen Zeitstempel aufweist und dass die Authentizität der Antwortnachricht durch das Kontrollgerät (zweites Endgerät) nur dann bestätigt wird, wenn das Alter des Zeitstempels unterhalb eines vorgegebenen Schwellwertes liegt. Beispielsweise kann vorgesehen sein, dass die Authentizität der Antwortnachricht nicht bestätigt wird, wenn der Zeitstempel älter als 60 Sekunden ist. Dadurch kann zusätzlich vermieden werden, dass eine durch ein Endgerät erzeugte Antwortnachricht auf ein unbefugtes erstes Endgerät übertragen und vervielfältigt wird. Eine generierte Antwortnachricht ist in diesem Fall lediglich 60 Sekunden lang gültig und kann über diesen Zeitraum hinaus nicht mehr verwendet werden. Dadurch kann die Sicherheit des erfindungsgemäßen Verfahrens weiter erhöht werden.

Gemäß einer Ausführungsform des erfindungsgemäßen Verfahrens kann vorgesehen sein, dass der Zeitstempel in einem Barcode, insbesondere in einem 2D-Barcode integriert ist. So kann beispielsweise das zweite Endgerät eine Anfragenachricht an das erste Endgerät versenden und das erste Endgerät in Reaktion auf die Anfragenachricht eine Antwortnachricht generieren, welche die relevanten Informationen in einem Barcode kodiert übermittelt. Das zweite Endgerät kann den Barcode auslesen und überprüfen, ob es sich tatsächlich um einen kürzlich generierten Barcode handelt, oder ob dieser beispielsweise vor 1 oder 2 Stunden generiert und gegebenenfalls später auf das kontrollierte Gerät übertragen wurde. In diesem Fall könnte der Kontrolleur den Fahrgast auffordern, sich auszuweisen.

Auch kann vorgesehen sein, dass die Antwortnachricht ein digitales Zertifikat enthält, in dem ein Sicherheitsindikator gespeichert ist, welcher das Erfüllen vorgegebener Sicherheitsanforderungen durch das erste Endgerät charakterisiert. In dem Sicherheitsindikator können Informationen enthalten sein, die das Ergebnis einer vorangegangenen Sicherheitsüberprüfung des ersten Endgeräts betreffen. Insbesondere kann dabei vorgesehen sein, dass bei der Registrierung des ersten Endgeräts beim Dienstleistungs-Provider (Ticket-Server) oder durch einen vom Dienstleistungs-Provider als vertrauensvoll eingestufte Stelle (Vertrauensanker) eine Sicherheitsüberprüfung des ersten Endgeräts durchgeführt wird, bei der überprüft wird, ob die durch den Dienstleistungs-Provider vorgegebenen Sicherheitsanforderungen durch das Endgerät erfüllt werden. Bei der Sicherheitsüberprüfung kann beispielsweise überprüft werden, ob das erste Endgerät über eine aktuelle Version des Betriebssystems verfügt und/oder ob auf dem ersten Endgerät eine Antivirus-Software installiert ist. Falls das erste Endgerät ein veraltetes Betriebssystem aufweist oder über keine Antivirus-Software verfügt, kann das Sicherheitsattribut eine entsprechende Information enthalten, die das erste Endgerät als unsicher charakterisiert. Auch kann bei der Sicherheitsüberprüfung kontrolliert werden, ob es sich bei dem ersten Endgerät um ein geroutetes Smartphone oder ein geroutetes Tablet handelt. Falls bei der Überprüfung festgestellt wird, dass das Endgerät geroutet ist, kann das Sicherheitsattribut eine entsprechende Information enthalten, durch die das erste Endgerät als unsicher klassifiziert wird. Die Sicherheitsüberprüfung kann dabei entweder standardisiert und für alle Endgeräte in identischer Weise oder individuell und in Abhängigkeit von dem erkannten Endgerät erfolgen. Beispielsweise kann dabei vorgesehen sein, dass sich die Sicherheitsanforderungen bei Endgeräten mit einem Android-Betriebssystem von den Sicherheitsanforderungen bei Endgeräten mit einem iOS-Betriebssystem unterscheiden. Auf diese Weise kann eine individualisierte Überprüfung der Endgeräte ermöglicht werden, wobei keine überflüssigen Überprüfungsschritte erfolgen. Durch die Bereitstellung des Sicherheitsindikators können einzelne Dienstleistungen in Abhängigkeit von den einzelnen Endgeräten gesteuert werden. So kann beispielsweise vorgesehen sein, dass die Endgeräte, die den Sicherheitsanforderungen des Dienstleistungs-Providers genügen, zum Kauf von Tickets berechtigt sind, während die Endgeräte, die den Sicherheitsanforderungen nicht genügen, keine Tickets erwerben können. Beispielsweise kann vorgesehen sein, dass die Endgeräte, die den Sicherheitsanforderungen nicht genügen, lediglich Informationen zu den Verbindungen abrufen können. Auch kann vorgesehen sein, dass das zweite Endgerät die Verifizierung des überprüften Tickets verweigert, sofern das erste Endgerät nicht den vorgegebenen Sicherheitsanforderungen entspricht. Das digitale Zertifikat, das den Sicherheitsindikator enthält, kann beispielsweise in dem elektronischen Ticket enthalten sein oder alternativ als ein von dem elektronischen Ticket separat ausgeführtes Element.

Gemäß einer Ausführungsform der Erfindung kann vorgesehen sein, dass der Sicherheitsindikator als ein binärer Sicherheits-Flag ausgeführt ist, der
- einen Wert gleich 1 enthält, falls eine zuvor erfolgte Sicherheitsüberprüfung des ersten Endgeräts ergeben hat, dass das erste Endgerät die vorgegebenen Sicherheitsanforderungen erfüllt, und
- einen Wert gleich 0 enthält, falls die zuvor erfolgte Sicherheitsüberprüfung des ersten Endgeräts ergeben hat, dass das erste Endgerät die vorgegebenen Sicherheitsanforderungen nicht erfüllt.

Auf diese Weise können die Ergebnisse einer vorangegangenen Sicherheitsüberprüfung des ersten Endgeräts in einem einzelnen Bit codiert werden. Dadurch wird die im Rahmen des erfindungsgemäßen Verfahrens übertragene Datenmenge begrenzt.

Des Weiteren kann bei dem erfindungsgemäßen Verfahren vorgesehen sein, dass das erste Endgerät und das zweite Endgerät jeweils ein Near Field Communication Modul (NFC-Modul) aufweisen und dass der erste Kommunikationskanal auf Near Field Communication (NFC) basiert. Die Übertragung der Anfragenachricht über einen NFC-Kommunikationskanal hat den Vorteil, dass die Anfragenachricht nicht von einem Dritten ausgelesen werden kann, da die Übertragung der Daten lediglich auf einer sehr kurzen Distanz (in der Regel einige wenige Zentimeter) erfolgt. Daher ist es für einen Dritten nahezu unmöglich, die Anfragenachricht, welche beispielsweise eine generierte Zufallszahl als Verifikationsnachricht enthalten kann, auszulesen und auf Grundlage dieser Verifikationsnachricht eine Antwortnachricht zu generieren, die anschließend auf das durch einen Kontrolleur überprüfte erste Endgerät übertragen werden könnte.

Zudem kann vorgesehen sein, dass der erste Kommunikationskanal auf einem Bluetooth-Übertragungsstandard basiert. Dies hat den Vorteil, dass das Überprüfungsverfahren über größere Distanzen (mehrere Meter) erfolgen kann. Beispielsweise kann dabei vorgesehen sein, dass ein Kontrollgerät zeitgleich mehrere Anfragenachrichten an verschiedene, in der Umgebung befindliche Smartphones aussendet und dadurch die Kontrolle mehrerer Endgeräte bzw. Fahrgäste zeitgleich erfolgt. Die für die Ticketkontrolle notwendige Zeit kann dadurch signifikant reduziert werden. Ein weiterer Vorteil der Verwendung des Bluetooth-Übertragungsstandards liegt darin, dass nicht alle auf dem Markt verfügbaren Smartphones über ein NFC-Modul verfügen. So verfügen insbesondere ältere Modelle über kein NFC-Modul bzw. zumindest über kein frei verwendbares NFC-Modul, während sie meist über ein Bluetooth-Modul verfügen.

Ferner kann vorgesehen sein, dass der erste Kommunikationskanal als optischer Kommunikationskanal ausgeführt ist. Dabei kann es insbesondere vorgesehen sein, dass die Kommunikation zwischen dem ersten Endgerät und dem zweiten Endgerät über Barcodes, insbesondere über 2D-Barcodes erfolgt, welche auf dem Display eines Endgeräts angezeigt und durch eine Kamera bzw. einen optischen Scanner des anderen Endgeräts ausgelesen werden kann.

Gemäß einer weiteren Ausführungsform des erfindungsgemäßen Verfahrens kann vorgesehen sein, dass sowohl das erste Endgerät, als auch das zweite Endgerät über eine Frontkamera verfügen. Anders ausgedrückt, verfügen also beide Endgeräte über eine Kamera, die jeweils auf der gleichen Seite eines jeden Endgeräts angeordnet ist, auf der auch die Anzeigen der Endgeräte angeordnet sind. Auf diese Weise kann es vorgesehen sein, dass zur Verifizierung der Ticketdaten beide Endgeräte frontal aufeinander ausgerichtet werden, sodass die Anfragenachricht vom zweiten Endgerät an das erste Endgerät und die Antwortnachricht vom ersten Endgerät an das zweite Endgerät übertragen werden kann. Dabei werden die entsprechenden Daten auf dem Display eines jeden Endgeräts (in kodierter oder unkodierter Form) angezeigt und über die Kamera des anderen Endgeräts ausgelesen.

Gemäß einer weiteren Ausführungsform des erfindungsgemäßen Verfahrens kann es zudem vorgesehen sein, dass das NFC-Modul des zweiten Endgeräts ein NFC-Tag emuliert. Anders ausgedrückt, gibt sich das Kontrollgerät als NFC-Tag aus. Dies hat den Vorteil, dass auch Smartphones, die nicht in der Lage sind, über die Standard-NFC-Schnittstelle zu kommunizieren, sondern lediglich NFC-Tags auszulesen, bei dem erfindungsgemäßen Verfahren verwendet werden können. Dies ist insbesondere bei einigen Modellen des Smartphone-Herstellers Apple der Fall. Da bei diversen iPhone-Modellen die NFC-Schnittstelle nur eingeschränkt geöffnet ist, sind diese Modelle nicht per sé dafür geeignet, über eine NFC-Schnittstelle mit einem Kontrollgerät zu kommunizieren. Emuliert hingegen das zweite Endgerät ein NFC-Tag, so wird dadurch die Kommunikation auch mit den genannten Modellen ermöglicht. Dadurch wird in vorteilhafter Weise ein plattformübergreifend einsetzbares Verfahren bereitgestellt.

Gemäß einer weiteren Ausführungsform des erfindungsgemäßen Verfahrens kann vorgesehen sein, dass die Antwortnachricht biometrische Daten des Verbrauchers, insbesondere Daten betreffend einen Fingerabdruck, eine Stimme, Merkmale eines Gesichts oder ein Muster einer Iris, enthält. Dies hat den Vorteil, dass die Identität des Benutzers zusätzlich durch den Abgleich der biometrischen Daten verifiziert werden kann. Die Verifikation erfolgt durch das zweite Endgerät, indem die vom ersten Endgerät erhaltenen biometrischen Daten mit den Daten aus einer Datenbank oder direkt mit den Merkmalen des Benutzers verglichen werden, die entweder auf dem zweiten Endgerät oder aber auch in einem über eine Netzwerkverbindung zugänglichen Speicherelement gespeichert sind. Die Datenbank kann beispielsweise den Fingerabdruck eines zuvor registrierten Benutzers sowie dessen vollständigen Namen und/oder Personalausweisnummer enthalten. Auf ähnliche Weise können beispielsweise die Stimme eines zuvor registrierten Benutzers und sein Name bzw. seine Anschrift in der Datenbank gespeichert sein. Dadurch kann das zweite Endgerät die Identität der kontrollierten Person durch die Überprüfung der biometrischen Daten verifizieren.

Ferner kann vorgesehen sein, dass die Antwortnachricht eine fotografische Abbildung des Verbrauchers bzw. eine fotografische Abbildung des Gesichtes des Verbrauchers, beinhaltet. Dies hat den Vorteil, dass das zweite Endgerät anschließend die vom ersten Endgerät empfangene fotografische Abbildung des Verbrauchers verifizieren kann. Gemäß einer Ausführungsform des erfindungsgemäßen Verfahrens kann vorgesehen sein, dass die fotografische Abbildung zunächst in ein "real life emoji Bild" umgewandelt wird und anschließend nur das genannte emoji Bild des Benutzers an das Kontrollgerät übertragen wird. Anders ausgedrückt, wird also eine Abbildung des Benutzers mit einer reduzierten Datenmenge generiert und an das Kontrollgerät übertragen. Die Datenmenge des emoji Bildes ist dabei im Vergleich zur ursprünglichen fotografischen Abbildung sehr stark reduziert. Daher kann die Übertragung der Antwortnachricht in vorteilhafter Weise innerhalb einer sehr kurzen Zeit erfolgen. Dennoch bietet das "real life emoji Bild" dem Kontrolleur weiterhin eine hinreichend hohe Identifizierbarkeit für die Anwendung im ÖPNV. Der Kontrolleur kann also bei der Überprüfung des elektronischen Tickets auch direkt überprüfen, ob das erste Endgerät tatsächlich der Person gehört, die im Besitz des Endgeräts ist. Auf dem zweiten Endgerät können daher zeitgleich die Ticketdaten und die fotografische Abbildung des Verbrauchers dargestellt werden, sodass der Kontrolleur innerhalb kürzester Zeit die Überprüfung durchführen kann.

Auch kann gemäß einer weiteren Ausführungsform des erfindungsgemäßen Verfahrens vorgesehen sein, dass das zweite Endgerät ein Speicherelement aufweist und/oder mit einem externen Speicherelement verbunden ist, auf dem eine Liste mit Identifikationsdaten gespeichert ist, bei denen die Wahrscheinlichkeit einer mangelnden Authentizität eine vorgegebene Wahrscheinlichkeitsschwelle überschreitet. Die Identifikationsdaten können insbesondere eine Ticketnummer oder einen Identifikator eines ersten Endgeräts aufweisen. Dadurch kann das Risiko, dass einzelne Betrüger Tickets kopieren, weiter reduziert werden. Beispielsweise kann vorgesehen sein, dass bei jeder Kontrolle die Identifikationsdaten, beispielsweise ein Hardware-Fingerabdruck der kontrollierten Endgeräte, aufgenommen werden. In einer Datenbank kann anschließend gespeichert werden, wie häufig diese Identifikationsdaten bei den bisherigen Kontrollen registriert wurden. Werden die Identifikationsdaten eines spezifischen Endgeräts besonders häufig registriert, so kann dies ein Indiz dafür sein, dass es sich um kopierte Tickets handelt, die zahlreich im Umlauf sind. Beispielsweise kann vorgesehen sein, dass in den Fällen, in denen an einem einzigen Tag die gleichen Identifikationsdaten mehr als zehn Mal durch Kontrollgeräte registriert werden, ein optisches Warnsignal durch das Kontrollgerät ausgegeben wird. Ein Kontrolleur kann in diesem Fall zusätzlich den Ausweis der kontrollierten Person anfordern. Auf diese Weise erfolgt eine sichere und dennoch effiziente Überprüfung der Fahrgäste, da nur in den Fällen, in denen Auffälligkeiten beobachtet werden, eine zusätzliche Überprüfung der Identifikationsdokumente, insbesondere eine Überprüfung des Personalausweises oder des Reisepasses, erfolgt. Das vorstehend beschriebene Speicherelement kann als ein integrierter Speicher bzw. als eine Festplatte ausgeführt sein. Sofern das Speicherelement als externes Speicherelement ausgeführt ist, kann das Speicherelement insbesondere als ein Cloud-Speicher ausgebildet sein, auf den sämtliche Kontrolleure bzw. Kontrollgeräte zugreifen können. Die Identifikationsdaten können insbesondere eine ID-Nummer des ersten Endgeräts und/oder biometrische Daten aufweisen. Durch die vorstehend beschriebene Ausführungsform kann ein effektives Überprüfungsverfahren bereitgestellt werden, das in der Lage ist, etwaige Betrugsfälle effizient aufzudecken.

Weiterhin kann gemäß einer vorteilhaften Ausführungsform des erfindungsgemäßen Verfahrens vorgesehen sein, dass die Wahl des ersten Kommunikationskanals und des zweiten Kommunikationskanals automatisiert erfolgt. Beispielsweise kann automatisch ein auf dem NFC-Standard basierender Kommunikationskanal ausgewählt werden, wenn ein NFC-fähiges Endgerät in unmittelbarer Nähe erkannt wird. Zudem kann automatisch ein auf dem Bluetooth-Standard basierender Kommunikationskanal ausgewählt werden, wenn kein NFC-fähiges Endgerät in der Nähe des Kontrollgeräts erkannt wird, aber stattdessen Bluetooth-fähige Geräte verfügbar sind. In analoger Weise können für die Kommunikation zwischen dem ersten Endgerät und dem Kontrollgerät beispielsweise optische Signale und akustische Signale verwendet werden, um entsprechend einen optischen oder akustischen Kommunikationskanal automatisch auszuwählen. Auch kann beispielsweise ein akustischer oder optischer Kommunikationskanal verwendet werden, um dynamische Adressen für andere zu verwendende Drahtlos-Kommunikationskanäle (z.B. Bluetooth oder WLAN) auszuwählen bzw. mitzuteilen. Ferner kann beispielsweise eines der Endgeräte ein akustisches Triggersignal generieren, dass dem anderen Endgerät signalisiert, dass die Kommunikation über ein akustisches Signal erfolgt. Das akustische Triggersignal kann beispielsweise ein spezifisches Spektrum aufweisen, das von dem jeweils anderen Endgerät aufgenommen und ausgewertet werden kann. Auf diese Weise wird ein intelligentes System bereitgestellt, dass sich an die individuelle Umgebungssituation anpasst.

Gemäß einer weiteren Ausführungsform des erfindungsgemäßen Verfahrens kann zudem vorgesehen sein, dass ein trainierbarer Klassifikator zur automatischen Auswahl der Kommunikationskanäle eingesetzt wird. Bei dem trainierbaren Klassifikator kann es sich insbesondere um ein künstliches neuronales Netz handeln. Der Klassifikator kann mit Daten aus der Vergangenheit trainiert werden, die beispielsweise Informationen darüber enthalten, in welcher Situation welche Kommunikationskanäle bevorzugt verwendet wurden.

Auch wenn das vorstehend beschriebene, erfindungsgemäße Verfahren zur praktischen Veranschaulichung vorwiegend im Zusammenhang mit einem Verfahren zur Überprüfung eines elektronischen Bahntickets beschrieben wurde, ist es für den Fachmann als selbstverständlich anzusehen, dass das erfindungsgemäße Verfahren nicht auf Verfahren zur Überprüfung von Bahntickets beschränkt ist, sondern dass das erfindungsgemäße Verfahren auch für die sichere Überprüfung sämtlicher Arten elektronischer Tickets geeignet ist. Insbesondere ist das beschriebene Verfahren auch zur Überprüfung von elektronischen Tickets für Konzerte, Festivals und Sportveranstaltungen geeignet.

Weiterhin wird zur Lösung der vorstehend genannten Aufgabe ein Kontrollgerät zur Überprüfung eines elektronischen Tickets, insbesondere eines elektronischen Bus- und/oder Bahntickets, gemäß dem unabhängigen Vorrichtungsanspruch vorgeschlagen. Dabei ist das elektronische Ticket auf einem ersten mobilen Endgerät hinterlegt, das einem Endverbraucher zugeordnet ist. Das erfindungsgemäße Kontrollgerät weist mindestens einen Prozessor, einen Speicher und ein Kommunikationsmodul auf und ist dazu ausgelegt,
- über einen ersten Kommunikationskanal eine Anfragenachricht an das erste Endgerät zu senden;
- über einen zweiten Kommunikationskanal eine Antwortnachricht von dem ersten Endgerät zu empfangen, wobei die Antwortnachricht von dem ersten Endgerät signiert ist und wobei der zweite Kommunikationskanal entweder identisch mit dem ersten Kommunikationskanal ist oder sich von dem ersten Kommunikationskanal unterscheidet;
- die signierte Antwortnachricht zu verifizieren; und
- die Authentizität der Antwortnachricht zu bestätigen, sofern zuvor die Authentizität der Signatur durch das Kontrollgerät bestätigt werden konnte.

Gemäß einer Ausführungsform des erfindungsgemäßen Kontrollgeräts kann vorgesehen sein, dass das Kommunikationsmodul ein NFC-Modul, ein Bluetooth-Modul, eine Kamera und/oder ein Display aufweist.

Es wird für den Fachmann als selbstverständlich angesehen, dass sämtliche im Zusammenhang mit dem erfindungsgemäßen Verfahren beschriebenen Merkmale auch mit dem erfindungsgemäßen Kontrollgerät kombinierbar sind.

Die vorliegende Erfindung bietet insgesamt ein mehrstufiges Verfahren sowie einen Vertrauensanker, eine vertrauenswürdige Client-Anwendung, ein Ticket-Ausgabesystem, ein Kontrollgerät und einen Sperr-Service. Jedes der einzelnen Komponenten der vorliegenden Erfindung trägt zu einer insgesamt erhöhten Sicherheit bei, wobei ein möglicher Missbrauch des bereitgestellten Ticket-Systems gegenüber den bislang bekannten Systemen deutlich erschwert wird.

Die Erfindung wird nachfolgend anhand von Ausführungsbeispielen und unter Bezugnahme auf die Zeichnungen näher erläutert. Im Einzelnen zeigen dabei:
- Fig. 1: eine schematische Darstellung eines unidirektionalen Ticket-Überprüfungsverfahrens gemäß dem Stand der Technik,
- Fig. 2: eine schematische Darstellung eines Ausführungsbeispiels des erfindungsgemäßen, bidirektionalen Ticket-Überprüfungsverfahrens,
- Fig. 3: eine weitere schematische Darstellung eines Ausführungsbeispiels des erfindungsgemäßen Verfahrens, wobei zwischen einem Kontrollgerät und einem mobilen Endgerät eine Anfragenachricht A und eine Antwortnachricht B ausgetauscht werden,
- Fig. 4: eine weitere schematische Darstellung eines Ausführungsbeispiels des erfindungsgemäßen Verfahrens, wobei ein Kontrollgerät und ein mobiles Endgerät zusätzlich mit einem Server kommunizieren,
- Fig. 5: eine weitere schematische Darstellung eines Ausführungsbeispiels des erfindungsgemäßen Verfahrens, wobei die Antwortnachricht ein digitales Zertifikat enthält,
- Fig. 6: eine schematische Darstellung eines Ausführungsbeispiels des erfindungsgemäßen Verfahrens, wobei die Antwortnachricht einen Zeitstempel aufweist,
- Fig. 7: eine weitere schematische Darstellung eines Ausführungsbeispiels des erfindungsgemäßen Verfahrens, wobei der Server einen dem mobilen Endgerät zugeordneten Identifikator ermittelt und ein digitales Zertifikat erstellt, das den Identifikator enthält,
- Fig. 8: ein Flussdiagramm zur Beschreibung eines Ausführungsbeispiels des erfindungsgemäßen Verfahrens und
- Fig. 9: ein weiteres Flussdiagramm zur Beschreibung eines weiteren Ausführungsbeispiels des erfindungsgemäßen Verfahrens, bei dem die Anfragenachricht eine Verifikationsnachricht umfasst.

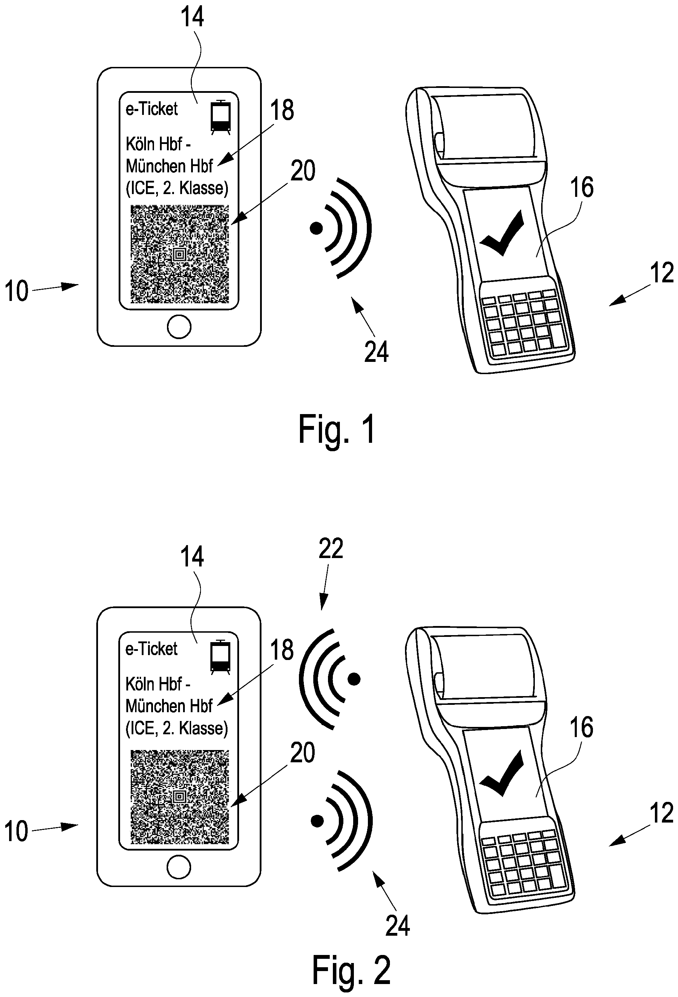

In der Fig. 1 ist eine schematische Darstellung eines Ticket-Überprüfungsverfahrens gemäß dem Stand der Technik dargestellt. Bei dem dargestellten Verfahren erfolgt eine unidirektionale Kommunikation zwischen einem ersten mobilen Endgerät 10, das einem Verbraucher zugeordnet ist, und einem zweiten Endgerät 12, das einem Kontrolleur zugeordnet ist. Das erste mobile Endgerät ist in dem dargestellten Ausführungsbeispiel als Smartphone ausgeführt. Das zweite Endgerät 12, das im Zusammenhang mit der vorliegenden Erfindung auch als Kontrollgerät bezeichnet wird, ist in dem dargestellten Beispiel als ein mobiles Endgerät ausgeführt. Das erste mobile Endgerät 10 und das Kontrollgerät 12 verfügen jeweils über ein Anzeigeelement 14, 16. Auf dem Anzeigeelement 14 des ersten Endgeräts 10 werden die Ticketdaten 18 in Textform dargestellt. Die Ticketdaten 18 können insbesondere Informationen über die Fahrstrecke, die gebuchte Klasse (1. Klasse oder 2. Klasse) oder eine Sitzplatzreservierung enthalten. Zudem werden die Ticketdaten in verschlüsselter Form mittels eines 2D-Barcodes 20 auf dem Anzeigeelement 14 des ersten Endgeräts 10 dargestellt. Das erste Endgerät 10 sendet über einen Kommunikationskanal 24 die Ticketdaten an das Kontrollgerät 12. Der Kommunikationskanal 24 kann dabei als optischer Kommunikationskanal ausgeführt sein. So kann das Kontrollgerät 12 über eine Kamera oder einen Barcode-Scanner (beide in der Fig. 1 nicht abgebildet) die auf dem ersten Endgerät 10 hinterlegten Ticketdaten auslesen. Im Anschluss werden die Ticketdaten ausgewertet und überprüft. Beispielsweise kann die gebuchte Fahrstrecke mit der tatsächlichen Fahrstrecke verglichen werden, um zu überprüfen, ob sich der Fahrgast im richtigen Zug befindet. Sofern die Ticketdaten korrekt sind und der Fahrgast eine gültige Berechtigung zur Nutzung des gewählten Verkehrsmittels besitzt, kann auf dem Anzeigeelement 16 des zweiten Endgeräts 12 eine Bestätigungsnachricht angezeigt werden. Somit weiß der Kontrolleur, dass der Fahrgast ein gültiges Ticket besitzt.

In der Fig. 2 ist eine schematische Darstellung eines Ausführungsbeispiels des erfindungsgemäßen Verfahrens gezeigt, bei der die Kommunikation zwischen dem Kontrollgerät 12 und dem Endgerät 10 bidirektional erfolgt. Dabei kann das Kontrollgerät 12 über einen ersten Kommunikationskanal 22 Daten an das erste Endgerät 10 senden. Das erste Endgerät 10 kann über einen zweiten Kommunikationskanal 24 Daten an das Kontrollgerät 12 senden. Die beiden Kommunikationskanäle 22, 24 können dabei identisch sein. Beispielsweise können beide Kommunikationskanäle auf dem NFC-Übertragungsstandard basieren. Auch kann vorgesehen sein, dass der erste Kommunikationskanal 22 auf dem NFC-Übertragungsstandard basiert und der zweite Kommunikationskanal 24 als optischer Kommunikationskanal ausgeführt ist. Auf diese Weise kann die Anfragenachricht A über einen NFC-Kommunikationskanal erfolgen, während die Antwortnachricht B als Barcode dargestellt und durch das Kontrollgerät 12 optisch ausgelesen wird. Durch die bidirektionale Kommunikation bei der Überprüfung der Tickets kann die Sicherheit erhöht werden, wie in den nachfolgenden Figuren noch gezeigt wird.

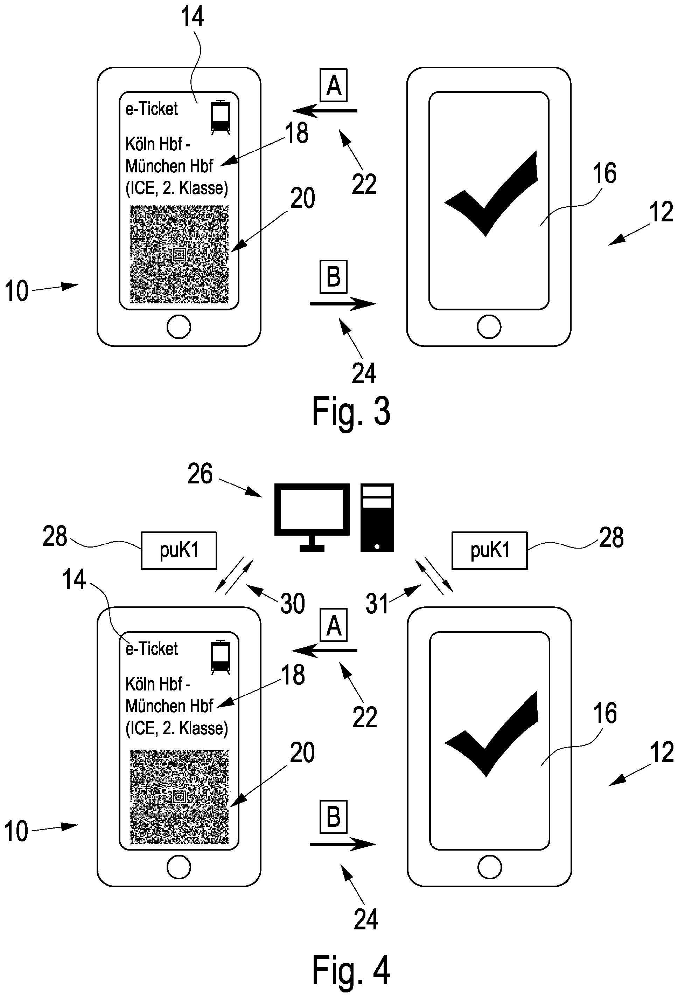

In der Fig. 3 ist eine konkrete Ausführungsform des erfindungsgemäßen Verfahrens gezeigt, wobei sowohl das Kontrollgerät 12, als auch das erste mobile Endgerät 10, als Smartphones ausgeführt sind. Gemäß dem dargestellten Verfahren sendet zunächst das Kontrollgerät 12 über den ersten Kommunikationskanal 22 eine Anfragenachricht A an das erste Endgerät 10. Das erste Endgerät 10 sendet anschließend über den zweiten Kommunikationskanal 24 eine Antwortnachricht B an das Kontrollgerät 12. Dabei ist die Antwortnachricht B durch das erste Endgerät 10 signiert. Durch die Signatur der Antwortnachricht B kann das Kontrollgerät 12 überprüfen, ob die Antwortnachricht B tatsächlich vom ersten Endgerät 10 erstellt wurde oder ob der Inhalt der Antwortnachricht B gegebenenfalls manipuliert wurde. Die Signatur der Antwortnachricht B durch das erste Endgerät 10 erfolgt über einen privaten Schlüssel des ersten Endgeräts 10. Bei der Überprüfung der Antwortnachricht B wird ein öffentlicher Schlüssel des ersten Endgeräts 10 verwendet, um die Authentizität der Antwortnachricht B zu überprüfen. Dieser öffentliche Schlüssel kann beispielsweise vorab auf dem Kontrollgerät 12 hinterlegt sein. Alternativ kann vorgesehen sein, dass die Antwortnachricht B den öffentlichen Schlüssel enthält. Sofern die Signatur der Antwortnachricht B durch das Kontrollgerät 12 verifiziert werden konnte und auch die Ticketdaten korrekt sind, kann auf dem Anzeigeelement 16 des Kontrollgeräts 12 eine Bestätigungsnachricht angezeigt werden.

Weiterhin ist in der Fig. 4 ein weiteres Ausführungsbeispiel des erfindungsgemäßen Verfahrens dargestellt, bei der das erste Endgerät 10 und das Kontrollgerät 12 mit einem Server 26 kommunizieren. Bei diesem Ausführungsbeispiel kann insbesondere vorgesehen sein, dass der öffentliche Schlüssel 28 des ersten Endgeräts 10 über einen dritten Kommunikationskanal 30 auf einem Server 26 hinterlegt wird. Dies kann beispielsweise dann erfolgen, wenn sich ein Verbraucher bei einem Verkehrsunternehmen registriert. In diesem Fall sind auf dem Server 26 sämtliche öffentliche Schlüssel eines jeden Verbrauchers gespeichert. Bei der Ticketkontrolle kann dann das Kontrollgerät 12 über einen vierten Kommunikationskanal 31 auf den Server 26 und den darauf gespeicherten öffentlichen Schlüssel 28 des ersten mobilen Endgeräts 10 zugreifen. Das Kontrollgerät 12 kann anschließend unter Verwendung des öffentlichen Schlüssels 28 die Signatur der Antwortnachricht B verifizieren. Sofern diese verifiziert werden konnte und auch die Ticketdaten korrekt sind, kann eine Bestätigungsnachricht auf dem Anzeigeelement 16 des zweiten Endgeräts 12 angezeigt werden.

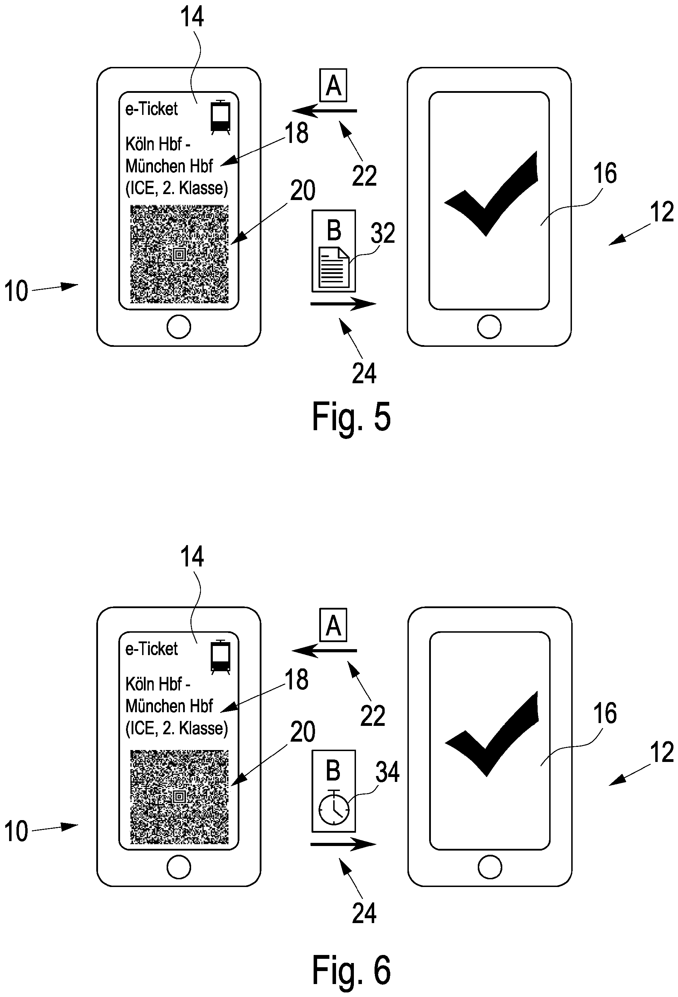

In der Fig. 5 ist eine weitere schematische Darstellung eines Ausführungsbeispiels des erfindungsgemäßen Verfahrens gezeigt. Bei diesem Ausführungsbeispiel sendet das Kontrollgerät 12 über den ersten Kommunikationskanal 22 die Anfragenachricht A an das erste Endgerät 10. Anschließend sendet das erste Endgerät 10 eine Antwortnachricht B an das Kontrollgerät 12. Die Antwortnachricht B enthält dabei ein digitales Zertifikat 32. Bei dem digitalen Zertifikat 32 kann es sich insbesondere um ein public-key-Zertifikat handeln. Das digitale Zertifikat 32 kann Informationen zum Aussteller des Zertifikats (beispielsweise dessen Namen), zum Verbraucher (beispielsweise dessen Namen, das Geburtsdatum und die Anschrift), zum Endgerät des Verbrauchers (beispielsweise die ID des Endgeräts) oder zur Gültigkeitsdauer des Zertifikats (beispielsweise: 3 Monate) aufweisen. Auch kann das digitale Zertifikat den öffentlichen Schlüssel 28 des ersten Endgeräts 10 oder den öffentlichen Schlüssel des Zertifikatsausstellers enthalten. Zudem kann das digitale Zertifikat 32 eine digitale Signatur des Ausstellers enthalten.

In der Fig. 6 ist ein weiteres Ausführungsbeispiel des erfindungsgemäßen Verfahrens gezeigt, wobei in diesem Ausführungsbeispiel die Antwortnachricht B einen Zeitstempel aufweist. Der Zeitstempel dokumentiert, wann die Antwortnachricht B generiert wurde. Das Kontrollgerät 12 kann somit beispielsweiseüberprüfen, ob die Antwortnachricht B generiert wurde, nachdem das Kontrollgerät 12 eine Anfragenachricht A an das erste Endgerät 10 gesendet hat, oder ob die Antwortnachricht B bereits generiert wurde, bevor das Kontrollgerät 12 die Anfragenachricht A an das Endgerät 10 gesendet hat. Falls die Antwortnachricht B bereits generiert worden ist, bevor die Anfragenachricht A an das erste Endgerät übermittelt wurde, ist davon auszugehen, dass die Authentizität des Tickets zumindest zweifelhaft ist. In diesem Fall kann auf dem Anzeigeelement 16 des zweiten Endgeräts 12 eine entsprechende Benachrichtigung erscheinen, die dem Kontrolleur empfiehlt, zusätzlich zu dem erfindungsgemäßen Überprüfungsverfahren auch noch die Ausweisdaten des Fahrgastes manuell zu überprüfen. Ein wesentlicher Vorteil des erfindungsgemäßen Verfahrens ist, dass diese - zeitlich aufwändigere - Überprüfung der Ausweisdaten nur dann durchgeführt werden muss, wenn bei dem erfindungsgemäßen Ticket-Überprüfungsverfahren Auffälligkeiten beobachtet werden. Bei dem in der Fig. 6 dargestellten Ausführungsbeispiel kann alternativ vorgesehen sein, dass der Zeitstempel 34 mit der aktuellen Uhrzeit verglichen wird und das elektronische Ticket als ungültig klassifiziert wird, wenn der Zeitstempel älter als eine vorgegebene Zeitdauer (bspw. 1 Minute oder 5 Minuten) ist. Wenn also die Antwortnachricht B vor 2 Stunden generiert wurde, kann dies als ein Indiz dafür gewertet werden, dass die Antwortnachricht B bzw. das elektronische Ticket ungültig ist. In diesem Fall können dann ebenfalls die Ausweisdaten des Fahrgastes manuell überprüft werden.

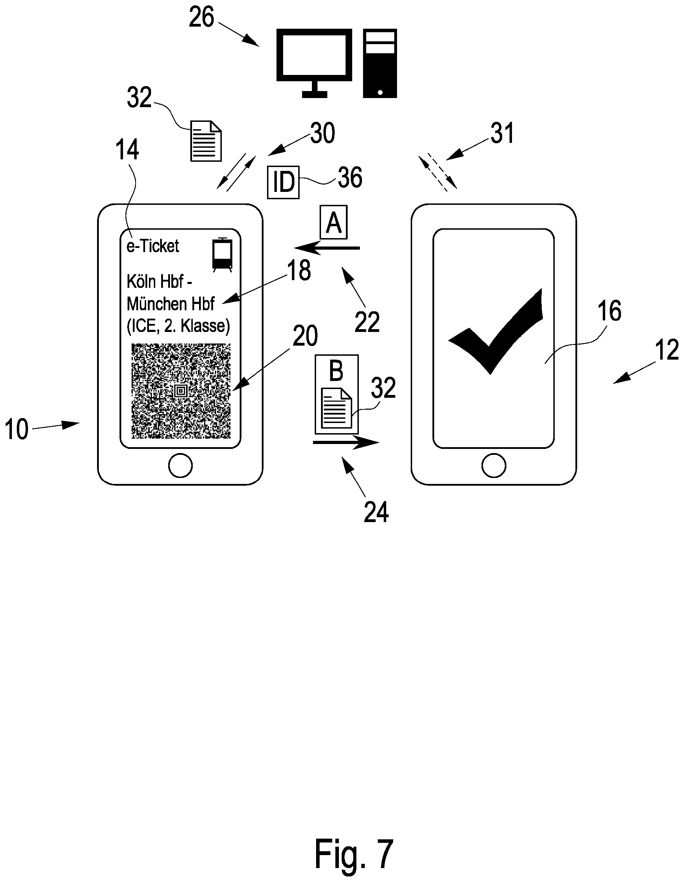

Eine weitere bevorzugte Ausführungsform des erfindungsgemäßen Verfahrens ist in der Fig. 7 dargestellt. Bei diesem Ausführungsbeispiel enthält die Antwortnachricht B ein digitales Zertifikat 32. Das digitale Zertifikat 32 wurde zuvor von dem Server 26 generiert. Die Generierung des digitalen Zertifikats 32 kann beispielsweise erfolgen, wenn sich der Benutzer beim Verkehrsunternehmen registriert. Bei der Registrierung ermittelt der Server 26 einen eindeutigen Identifikator 36 des ersten Endgeräts 10. Bei diesem Identifikator 36 kann es sich beispielsweise um einen Hardware-Fingerabdruck handeln. Dieser kann, wie bereits vorstehend ausgeführt, beispielsweise über die Seriennummer einer Hardware-Komponente, insbesondere eines Prozessors oder eines Arbeitsspeichers, des ersten Endgeräts 10, ermittelt werden. Anders ausgedrückt, kann das erste Endgerät 10 bei der Registrierung beim Verkehrsunternehmen einen Identifikator 36 an den Server 26 übertragen. Alternativ kann der Server den Identifikator des ersten Endgeräts 10 auslesen. Anschließend generiert der Server 26 ein digitales Zertifikat 32, das den Identifikator 36 des ersten Endgeräts 10 enthält. Durch den Identifikator 36 ist das erste Endgerät 10 beim späteren Ticket-Überprüfungsverfahren eindeutig zu identifizieren. Das digitale Zertifikat 32 ist vorzugsweise mit einer digitalen Signatur versehen. Die Kommunikation zwischen dem ersten Endgerät 10 und dem Server 26 erfolgt über einen dritten Kommunikationskanal 30. Bei der Überprüfung des elektronischen Tickets durch das Kontrollgerät 12 kann die Antwortnachricht B und das darin enthaltene digitale Zertifikat 32 überprüft werden. Auch wird bei der Überprüfung des elektronischen Tickets der Identifikator des ersten Endgeräts 10 ausgelesen, wie dies zuvor durch den Server 20 erfolgt ist. Wenn das Kontrollgerät 12 zu dem Ergebnis gelangt, dass der Identifikator des ersten Endgeräts 10 von dem im digitalen Zertifikat 32 hinterlegten Identifikator abweicht, kann dies als ein Indiz dafür gewertet werden, dass das elektronische Ticket nicht gültig ist bzw. dass der Fahrgast nicht im Besitz einer gültigen Berechtigung zur Nutzung des Verkehrsmittels ist. In diesem Fall kann auf dem Anzeigeelement 16 des Kontrollgeräts 12 eine Benachrichtigung angezeigt werden, mittels derer dem Kontrolleur empfohlen wird, die Ausweisdaten des Fahrgastes manuell zu überprüfen. Alternativ hierzu kann vorgesehen sein, dass die im digitalen Zertifikat hinterlegte ID mit der im elektronischen Ticket gespeicherten ID verglichen wird. In diesem Fall kann eine Abweichung der ID im digitalen Zertifikat von der im Ticket gespeicherten ID als ein Indiz dafür gewertet werden, dass das elektronische Ticket nicht gültig ist bzw. dass der Fahrgast nicht im Besitz einer gültigen Berechtigung zur Nutzung des gewählten Verkehrsmittels ist. Prinzipiell gibt es bei der Überprüfung der ID insgesamt drei verschiedene Möglichkeiten (Vergleich der im Ticket gespeicherten ID mit der im digitalen Zertifikat hinterlegten ID, Vergleich der im Ticket gespeicherten ID mit der vom ersten Endgerät ausgelesenen ID, Vergleich der im digitalen Zertifikat hinterlegten ID mit der vom ersten Endgerät ausgelesenen ID). Bei dem dargestellten Ausführungsbeispiel des erfindungsgemäßen Verfahrens kann es optional vorgesehen sein, dass das Kontrollgerät 12 über einen vierten Kommunikationskanal 31 mit dem Server 26 kommuniziert. Dies kann beispielsweise dazu genutzt werden, den öffentlichen Schlüssel des Servers 26 oder des ersten Endgeräts 10 abzufragen. Alternativ kann aber auch vorgesehen sein, dass die vorgenannten Schlüssel standardmäßig in dem Kontrollgerät 12 hinterlegt sind.

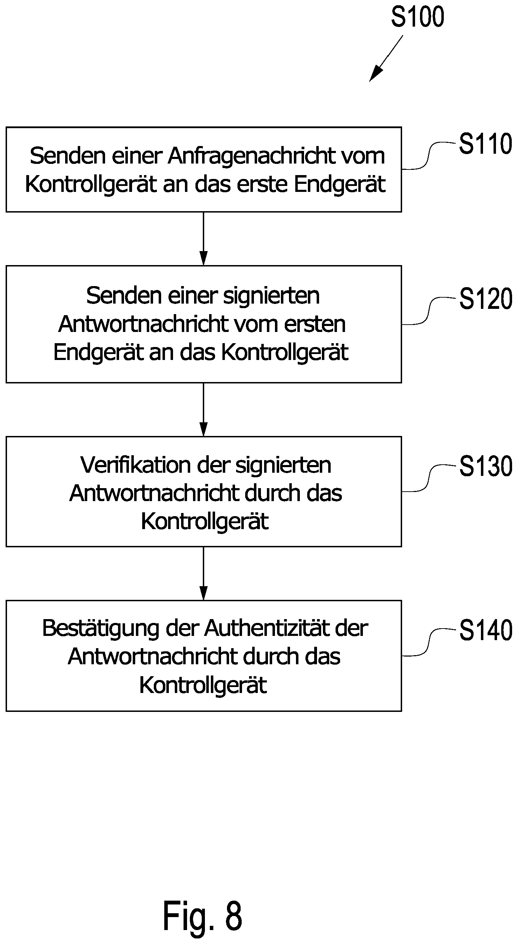

In der Fig. 8 sind die einzelnen Schritte eines Ausführungsbeispiels des erfindungsgemäßen Verfahrens dargestellt. In Reaktion auf eine Anfragenachricht A des Kontrollgeräts 12 (zweites Endgerät) generiert das erste Endgerät 10 eine signierte Antwortnachricht B. Durch die Überprüfung der in der Antwortnachricht B enthaltenen Signatur kann das Kontrollgerät 12 überprüfen, ob die Antwortnachricht B tatsächlich von dem ersten Endgerät 10 erzeugt wurde und integer ist, oder ob die Signatur von einem anderen Gerät erzeugt wurde oder der Inhalt der Antwortnachricht B manipuliert wurde (Prinzip der Überprüfung der Identität und Integrität). Für die Verifikation der Signatur benötigt das Kontrollgerät den öffentlichen Schlüssel 28 des ersten Endgeräts 10. Dieser öffentliche Schlüssel 28 kann optional in der Antwortnachricht B enthalten sein. Alternativ kann es aber auch vorgesehen sein, dass dieser öffentliche Schlüssel 28 auf einem Server hinterlegt ist, auf den das Kontrollgerät 12 zugreifen kann.

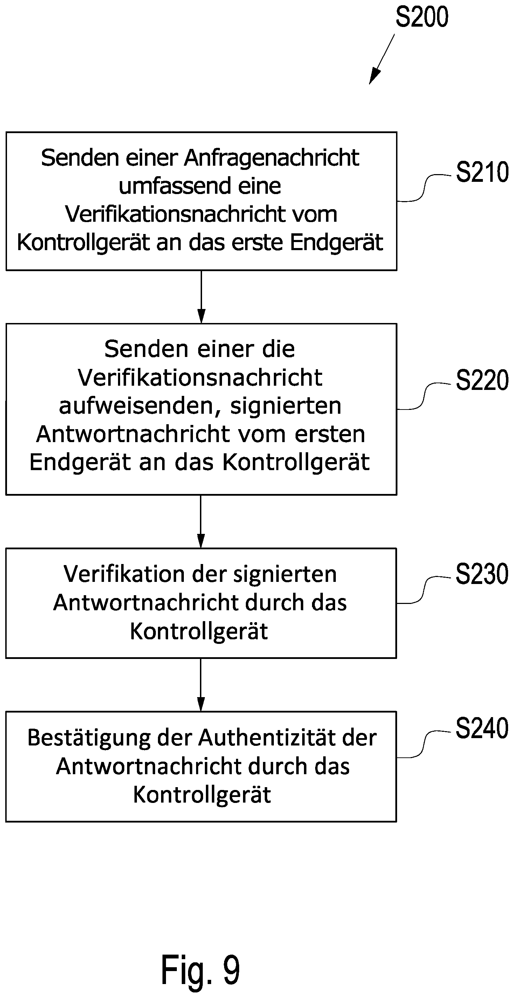

Schließlich sind in der Fig. 9 die einzelnen Schritte eines weiteren Ausführungsbeispiels des erfindungsgemäßen Verfahrens dargestellt. Bei diesem Ausführungsbeispiel enthält die Anfragenachricht B, die vom Kontrollgerät 12 an das erste Endgerät 10 gesendet wird, eine Verifikationsnachricht. Bei der Verifikationsnachricht kann es sich insbesondere um eine Textnachricht oder eine Zahlenfolge handeln, die von dem Kontrollgerät 12 generiert wurde. Insbesondere kann es sich um eine besonders lange Zufallszahl handeln, die von dem Kontrollgerät 12 erzeugt wurde. Das erste Endgerät 10 erhält diese Verifikationsnachricht und integriert diese in die Antwortnachricht B, die anschließend von dem ersten Endgerät 10 signiert wird. Danach sendet das erste Endgerät 10 die signierte Antwortnachricht B, welche die Verifikationsnachricht enthält, an das Kontrollgerät 12. Das Kontrollgerät 12 kann somit überprüfen, ob das erste Endgerät 10 tatsächlich die Verifikationsnachricht erhalten hat und zudem, ob es über einen entsprechenden privaten Schlüssel zur Erzeugung einer digitalen Signatur verfügt. Dadurch kann praktisch ausgeschlossen werden, dass das erste Endgerät 10 eine Antwortnachricht B versendet, die im Vorfeld durch einen Dritten generiert wurde, da ein Dritter nicht wissen kann, welche Verifikationsnachricht von dem Kontrollgerät 12 generiert und an das erste Endgerät 10 gesendet wird. Durch das in der Fig. 9 gezeigte Ausführungsbeispiel des erfindungsgemäßen Verfahrens kann daher eine besonders hohe Sicherheit bei der Überprüfung elektronischer Tickets gewährleistet werden.

### Bezugszeichenliste

- 10: erstes Endgerät
- 12: zweites Endgerät
- 14: Anzeigeelement des ersten Endgeräts
- 16: Anzeigeelement des zweiten Endgeräts
- 18: Ticketdaten in Textform
- 20: Barcode mit Ticketdaten
- 22: erster Kommunikationskanal
- 24: zweiter Kommunikationskanal
- 26: Server
- 28: öffentlicher Schlüssel
- 30: dritter Kommunikationskanal
- 31: vierter Kommunikationskanal
- 32: digitales Zertifikat
- 34: Zeitstempel
- 36: Identifikator
- S100: erfindungsgemäßes Verfahren gemäß einem ersten Ausführungsbeispiel
- S110: erster Verfahrensschritt gemäß dem ersten Ausführungsbeispiel
- S120: zweiter Verfahrensschritt gemäß dem ersten Ausführungsbeispiel
- S130: dritter Verfahrensschritt gemäß dem ersten Ausführungsbeispiel
- S140: vierter Verfahrensschritt gemäß dem ersten Ausführungsbeispiel
- S200: erfindungsgemäßes Verfahren gemäß einem zweiten Ausführungsbeispiel
- S210: erster Verfahrensschritt gemäß dem zweiten Ausführungsbeispiel
- S220: zweiter Verfahrensschritt gemäß dem zweiten Ausführungsbeispiel
- S230: dritter Verfahrensschritt gemäß dem zweiten Ausführungsbeispiel
- S240: vierter Verfahrensschritt gemäß dem zweiten Ausführungsbeispiel
- A: Anfragenachricht
- B: Antwortnachricht

## Patentansprüche

1. Verfahren zur sicheren Überprüfung eines elektronischen Tickets, insbesondere eines elektronischen Bus- und/oder Bahntickets, wobei das elektronische Ticket auf einem ersten mobilen Endgerät (10), das einem Endverbraucher zugeordnet ist, hinterlegt ist und die Überprüfung des Tickets durch ein zweites Endgerät (12) erfolgt, das einem Kontrolleur oder einem Kontrollsystem zugeordnet ist, wobei das Verfahren die nachfolgenden Schritte umfasst:
- Senden einer Anfragenachricht (A) von dem zweiten Endgerät (12) an das erste Endgerät (10) über einen ersten Kommunikationskanal (22);
- Senden einer Antwortnachricht (B) von dem ersten Endgerät (10) an das zweite Endgerät (12) über einen zweiten Kommunikationskanal (24), wobei die Antwortnachricht (B) von dem ersten Endgerät (10) signiert ist und wobei der zweite Kommunikationskanal (24) entweder identisch mit dem ersten Kommunikationskanal (22) ist oder sich von dem ersten Kommunikationskanal (22) unterscheidet;
- Verifikation der signierten Antwortnachricht (B) durch das zweite Endgerät (12); und
- Bestätigung der Authentizität der Antwortnachricht (B) durch das zweite Endgerät (12), sofern zuvor die Authentizität der Signatur durch das zweite Endgerät (12) verifiziert werden konnte; wobei
- die Anfragenachricht (A) eine durch das zweite Endgerät (12) generierte Zufallszahl der Länge L enthält, wobei L >= 1 ist, und die Antwortnachricht (B) eine mit einem privaten Schlüssel des ersten Endgeräts (10) verschlüsselte Darstellung der durch das zweite Endgerät (12) generierten Zufallszahl enthält;
- die Antwortnachricht (B) ein digitales Zertifikat (32) enthält, das von dem Dienstleistungs-Provider, welcher das elektronische Ticket erstellt hat, oder einer vom Dienstleistungs-Provider als vertrauensvoll eingestuften Stelle stammt;
- die Antwortnachricht (B) ein elektronisches Ticket aufweist, das neben den Ticketinformationen auch einen ersten digitalen Identifikator des ersten Endgeräts (10) aufweist und dass das elektronische Ticket eine digitale Signatur des Dienstleistungs-Providers enthält;
- die Antwortnachricht (B) zusätzlich zum elektronischen Ticket einen durch das erste Endgerät (10) erzeugten zweiten digitalen Identifikator des ersten Endgeräts (10) aufweist; und
- das zweite Endgerät (12) die Authentizität der Antwortnachricht (B) nur dann bestätigt, wenn der in dem elektronischen Ticket enthaltene erste Identifikator und der durch das erste Endgerät (10) erzeugte zweite Identifikator identisch sind.

2. Verfahren nach Anspruch 1, **dadurch gekennzeichnet, dass** die Antwortnachricht (B) einen Zeitstempel (34) aufweist und dass die Authentizität der Antwortnachricht (B) durch das Kontrollgerät nur dann bestätigt wird, wenn das Alter des Zeitstempels (34) unterhalb einer vorgegebenen Schwelle liegt.

3. Verfahren nach Anspruch 1, **dadurch gekennzeichnet, dass** die Antwortnachricht (B) ein digitales Zertifikat (32) enthält, in dem ein Sicherheitsindikator gespeichert ist, welcher das Erfüllen vorgegebener Sicherheitsanforderungen durch das erste Endgerät charakterisiert.

4. Verfahren nach Anspruch 3, **dadurch gekennzeichnet, dass** der Sicherheitsindikator als ein binärer Sicherheits-Flag ausgeführt ist, der
- einen Wert gleich 1 enthält, falls eine zuvor erfolgte Sicherheitsüberprüfung des ersten Endgeräts (10) ergeben hat, dass das erste Endgerät (10) vorgegebene Sicherheitsanforderungen erfüllt, und
- einen Wert gleich 0 enthält, falls die zuvor erfolgte Sicherheitsüberprüfung des ersten Endgeräts (10) ergeben hat, dass das erste Endgerät (10) die vorgegebenen Sicherheitsanforderungen nicht erfüllt.

5. Verfahren nach einem der Ansprüche 1 bis 4, **dadurch gekennzeichnet, dass** das erste Endgerät (10) und das zweite Endgerät (12) jeweils ein Near Field Communication Modul (NFC-Modul) aufweisen und dass der erste Kommunikationskanal (22) auf Near Field Communication (NFC) basiert.

6. Verfahren nach einem der Ansprüche 1 bis 5, **dadurch gekennzeichnet, dass** das NFC-Modul des zweiten Endgeräts (12) ein NFC-Tag emuliert.

7. Verfahren nach einem der Ansprüche 1 bis 6, **dadurch gekennzeichnet, dass** der zweite Kommunikationskanal (24) auf Near Field Communication, NFC, basiert.

8. Verfahren nach einem der Ansprüche 1 bis 7, **dadurch gekennzeichnet, dass** die Antwortnachricht (B) biometrische Daten des Verbrauchers, insbesondere Daten betreffend einen Fingerabdruck, eine Stimme, Merkmale eines Gesichts oder ein Muster einer Iris, enthält.

9. Verfahren nach einem der Ansprüche 1 bis 8, **dadurch gekennzeichnet, dass** die Antwortnachricht (B) eine fotografische Abbildung des Verbrauchers bzw. eine fotografische Abbildung des Gesichtes des Verbrauchers beinhaltet.

10. Verfahren nach einem der Ansprüche 1 bis 9, **dadurch gekennzeichnet, dass** das zweite Endgerät (12) ein Speicherelement aufweist und/oder mit einem externen Speicherelement verbunden ist, auf dem eine Liste mit Identifikationsdaten gespeichert ist, bei denen die Wahrscheinlichkeit einer mangelnden Authentizität eine vorgegebene Wahrscheinlichkeitsschwelle überschreitet.

11. Verfahren nach einem der Ansprüche 1 bis 10, **dadurch gekennzeichnet, dass** die Wahl des ersten Kommunikationskanals (22) und des zweiten Kommunikationskanals (24) automatisiert erfolgt.

12. Verfahren nach einem der Ansprüche 1 bis 11, **dadurch gekennzeichnet, dass** die Antwortnachricht (B) Informationen über einen digitalen Fingerabdruck des ersten Endgeräts (10) enthält.

13. Kontrollgerät zur Überprüfung eines elektronischen Tickets, insbesondere eines elektronischen Bus- und/oder Bahntickets, wobei das elektronische Ticket auf einem ersten mobilen Endgerät (10) hinterlegt ist, das einem Endverbraucher zugeordnet ist, mit mindestens einem Prozessor, einem Speicher und einem Kommunikationsmodul, wobei das Kontrollgerät dazu ausgelegt ist,
- über einen ersten Kommunikationskanal (22) eine Anfragenachricht (A) an das erste Endgerät (10) zu senden;
- über einen zweiten Kommunikationskanal (24) eine Antwortnachricht (B) von dem ersten Endgerät (10) zu empfangen, wobei die Antwortnachricht (B) von dem ersten Endgerät (10) signiert ist und wobei der zweite Kommunikationskanal entweder identisch mit dem ersten Kommunikationskanal ist oder sich von dem ersten Kommunikationskanal (22) unterscheidet;
- die signierte Antwortnachricht (B) zu verifizieren; und
- die Authentizität der Antwortnachricht (B) zu bestätigen, sofern zuvor die Authentizität der Signatur durch das Kontrollgerät bestätigt werden konnte; wobei
- die Anfragenachricht (A) eine durch das zweite Endgerät (12) generierte Zufallszahl der Länge L enthält, wobei L >= 1 ist, und die Antwortnachricht (B) eine mit einem privaten Schlüssel des ersten Endgeräts (10) verschlüsselte Darstellung der durch das zweite Endgerät (12) generierten Zufallszahl enthält;
- die Antwortnachricht (B) ein digitales Zertifikat (32) enthält, das von dem Dienstleistungs-Provider, welcher das elektronische Ticket erstellt hat, oder einer vom Dienstleistungs-Provider als vertrauensvoll eingestuften Stelle stammt;
- die Antwortnachricht (B) ein elektronisches Ticket aufweist, das neben den Ticketinformationen auch einen ersten digitalen Identifikator des ersten Endgeräts (10) aufweist und dass das elektronische Ticket eine digitale Signatur des Dienstleistungs-Providers enthält;
- die Antwortnachricht (B) zusätzlich zum elektronischen Ticket einen durch das erste Endgerät (10) erzeugten zweiten digitalen Identifikator des ersten Endgeräts (10) aufweist; und
- das zweite Endgerät (12) die Authentizität der Antwortnachricht (B) nur dann bestätigt, wenn der in dem elektronischen Ticket enthaltene erste Identifikator und der durch das erste Endgerät (10) erzeugte zweite Identifikator identisch sind.

14. Kontrollgerät nach Anspruch 13, **dadurch gekennzeichnet, dass** das Kommunikationsmodul ein NFC-Modul, ein Bluetooth-Modul, eine Kamera und/oder ein Display aufweist.

## Claims

1. A method for securely checking an electronic ticket, in particular an electronic bus and/or railway ticket, wherein the electronic ticket is stored on a first mobile terminal device (10) allocated to an end consumer, and the ticket is checked using a second terminal device (12) allocated to a ticket inspector or to a control system, wherein the method comprises the following steps:
- sending a request message (A) from the second terminal device (12) to the first terminal device (10) via a first communication channel (22);
- sending a response message (B) from the first terminal device (10) to the second terminal device (12) via a second communication channel (24), the response message (B) being signed by the first terminal device (10), and the second communication channel (24) either being identical with the first communication channel (22) or different from the first communication channel (22);
- verifying the signed response message (B) by the second terminal device (12); and
- confirming the authenticity of the response message (B) by the second terminal device (12), if the second terminal device (12) was previously able to verify the authenticity of the signature; wherein
- the request message (A) comprises a random number of the length L, generated by the second terminal device (12), where L >=1, and the response message (B) includes a representation of the random number generated by the second terminal device (12), encrypted using a private key of the first terminal device (10);
- the response message (B) includes a digital certificate (32) that originates from the service provider that has issued the electronic ticket or from an entity classified as trustworthy by the service provider;
- the response message (B) comprises an electronic ticket which, besides the ticket information, also comprises a first digital identifier of the first terminal device (10), and that the electronic ticket comprises a digital signature of the service provider;
- in addition to the electronic ticket, the response message (B) comprises a second digital identifier of the first terminal device (10) generated by the first terminal device (10); and
- the second terminal device (12) confirms the authenticity of the response message (B) only if the first identifier contained in the electronic ticket and the second identifier generated by the first terminal device (10) are identical.

2. The method according to claim 1, **characterized in that** the response message (B) comprises a time stamp (34), and that the authenticity of the response message (B) is confirmed by the control device only if the age of the time stamp (34) is below a predetermined threshold value.

3. The method according to claim 1, **characterized in that** the response message (B) contains a digital certificate (32) in which a security indicator is stored which characterizes the fulfillment of predetermined security requirements by the first terminal device.

4. The method according to claim 3, **characterized in that** the security indicator is implemented as a binary security flag, which
- has a value of 1, if a previous security check of the first terminal device (10) has shown that the first terminal device (10) fulfills the predetermined security requirements, and
- has a value of 0, if the previous security check of the first terminal device (10) has shown that the first terminal device (10) does not fulfill the predetermined security requirements.

5. The method according to one of claims 1 to 4, **characterized in that** the first terminal device (10) and the second terminal device (12) each comprise a near field communication module (NFC module), and that the first communication channel (22) is based on near field communication (NFC).

6. The method according to one of claims 1 to 5, **characterized in that** the NFC module of the second terminal device (12) emulates an NFC tag.

7. The method according to any one of claims 1 to 6, **characterized in that** the second communication channel (24) is based on Near Field Communication, NFC.

8. The method according to any one of claims 1 to 7, **characterized in that** the response message (B) contains biometrical data of the consumer, in particular data related to a fingerprint, a voice, features of a face or a pattern of an iris.

9. The method according to any one of claims 1 to 8, **characterized in that** the response message (B) comprises a photographic image of the consumer or a photographic image of the consumer's face.

10. The method according to any one of claims 1 to 9, **characterized in that** the second terminal (12) comprises a memory element and/or is connected with an external memory element which stores a list of identification data for which the probability of a lack in authenticity exceeds a predetermined probability threshold.

11. The method according to any one of claims 1 to 10, **characterized in that** the selection of the first communication channel (22) and the second communication channel (24) is automated.

12. The method according to any one of claims 1 to 11, **characterized in that** the response message (B) includes information about a digital fingerprint of the first terminal device (10).

13. A control device for checking an electronic ticket, in particular an electronic bus and/or railway ticket, wherein the electronic ticket is stored on a first mobile terminal device (10) associated with an end consumer, comprising at least a processor, a memory and a communication module, the control device being configured to
- send a request message (A) to the first terminal device (10) via a first communication channel (22);
- receive a response message (B) from the first terminal device (10) via a second communication channel (24), the response message (B) being signed by the first terminal device (10), and the second communication channel either being identical with the first communication channel or different from the first communication channel (22);
- verify the signed response message (B); and
- confirm the authenticity of the response message (B) if the authenticity of the signature could be confirmed by the control device before; wherein
- the request message (A) comprises a random number of the length L, generated by the second terminal device (12), where L >=1, and the response message (B) includes a representation of the random number generated by the second terminal device (12), encrypted using a private key of the first terminal device (10);
- the response message (B) includes a digital certificate (32) that originates from the service provider that has issued the electronic ticket or from an entity classified as trustworthy by the service provider;
- the response message (B) comprises an electronic ticket which, besides the ticket information, also comprises a first digital identifier of the first terminal device (10), and that the electronic ticket comprises a digital signature of the service provider;
- in addition to the electronic ticket, the response message (B) comprises a second digital identifier of the first terminal device (10) generated by the first terminal device (10); and
- the second terminal device (12) confirms the authenticity of the response message (B) only if the first identifier contained in the electronic ticket and the second identifier generated by the first terminal device (10) are identical.

14. The control device according to claim 13, **characterized in that** the communication module comprises an NFC module, a Bluetooth module, a camera and/or a display.

## Revendications

1. Procédé permettant la vérification sûre d'un billet électronique, en particulier d'un billet électronique de bus et/ou de train, dans lequel le billet électronique est déposé sur un premier terminal (10) mobile associé à un utilisateur final et la vérification du billet est effectuée par un second terminal (12) associé à un contrôleur ou à un système de contrôle, dans lequel le procédé comprend les étapes suivantes :
- envoi d'un message de requête (A) du second terminal (12) vers le premier terminal (10) par l'intermédiaire d'un premier canal de communication (22) ;
- envoi d'un message de réponse (B) du premier terminal (10) vers le second terminal (12) par l'intermédiaire d'un second canal de communication (24), dans lequel le message de réponse (B) est signé par le premier terminal (10) et dans lequel le second canal de communication (24) est soit identique au premier canal de communication (22) soit différent du premier canal de communication (22) ;
- vérification par le second terminal (12) du message de réponse (B) signé ; et
- confirmation de l'authenticité du message de réponse (B) par le second terminal (12) à condition que l'authenticité de la signature puisse être vérifiée préalablement par le second terminal (12) ; dans lequel
- le message de requête (A) contient un nombre aléatoire de la longueur L, lequel nombre aléatoire est généré par le second terminal (12), dans lequel L>=1, et le message de réponse (B) contient une représentation du nombre aléatoire généré par le second terminal (12), laquelle représentation est cryptée avec une clé privée du premier terminal (10) ;
- le message de réponse (B) contient un certificat numérique (32) qui provient du fournisseur de services qui a créé le billet électronique ou d'une entité considérée comme fiable par le fournisseur de services ;
- le message de réponse (B) présente un billet électronique qui, outre les informations de billet, présente également un premier identifiant numérique du premier terminal (10), et en ce que le billet électronique contient une signature numérique du fournisseur de services ;
- le message de réponse (B) présente, en plus du billet électronique, un second identifiant numérique du premier terminal (10), lequel second identifiant numérique est produit par le premier terminal (10) ; et
- le second terminal (12) ne confirme l'authenticité du message de réponse (B) que si le premier identifiant contenu dans le billet électronique et le second identifiant produit par le premier terminal (10) sont identiques.

2. Procédé selon la revendication 1, **caractérisé en ce que** le message de réponse (B) présente un horodatage (34) et **en ce que** l'authenticité du message de réponse (B) n'est confirmée par l'appareil de contrôle que si l'âge de l'horodatage (34) est inférieur à un seuil prédéfini.

3. Procédé selon la revendication 1, **caractérisé en ce que** le message de réponse (B) contient un certificat numérique (32) dans lequel est stocké un indicateur de sécurité qui caractérise le respect, par le premier terminal, d'exigences de sécurité prédéfinies.

4. Procédé selon la revendication 3, **caractérisé en ce que** l'indicateur de sécurité est réalisé sous la forme d'un fanion de sécurité binaire qui
- contient une valeur égale à 1 si une vérification de sécurité du premier terminal (10), effectuée au préalable, a révélé que le premier terminal (10) satisfait à des exigences de sécurité prédéfinies, et
- contient une valeur égale à 0 si la vérification de sécurité du premier terminal (10), effectuée au préalable, a révélé que le premier terminal (10) ne satisfait pas aux exigences de sécurité prédéfinies.

5. Procédé selon l'une des revendications 1 à 4, **caractérisé en ce que** le premier terminal (10) et le second terminal (12) présentent respectivement un module de communication en champ proche (NFC), et **en ce que** le premier canal de communication (22) est basé sur la communication en champ proche (NFC).

6. Procédé selon l'une des revendications 1 à 5, **caractérisé en ce que** le module NFC du second terminal (12) émule une étiquette NFC.

7. Procédé selon l'une des revendications 1 à 6, **caractérisé en ce que** le second canal de communication (24) est basé sur la communication en champ proche, NFC.

8. Procédé selon l'une des revendications 1 à 7, **caractérisé en ce que** le message de réponse (B) contient des données biométriques de l'utilisateur, en particulier des données concernant une empreinte digitale, une voix, des caractéristiques d'un visage ou un dessin d'un iris.

9. Procédé selon l'une des revendications 1 à 8, **caractérisé en ce que** le message de réponse (B) inclut une représentation photographique de l'utilisateur ou une représentation photographique du visage de l'utilisateur.

10. Procédé selon l'une des revendications 1 à 9, **caractérisé en ce que** le second terminal (12) présente un élément de stockage et/ou est relié à un élément de stockage externe sur lequel est stockée une liste de données d'identification pour lesquelles la probabilité de manque d'authenticité dépasse un seuil de probabilité prédéfini.

11. Procédé selon l'une des revendications 1 à 10, **caractérisé en ce que** la sélection du premier canal de communication (22) et du second canal de communication (24) est effectuée de façon automatisée.

12. Procédé selon l'une des revendications 1 à 11, **caractérisé en ce que** le message de réponse (B) contient des informations relatives à une empreinte digitale numérique du premier terminal (10).

13. Appareil de contrôle permettant la vérification d'un billet électronique, en particulier d'un billet de bus et/ou de train électronique, dans lequel le billet électronique est déposé sur un premier terminal (10) mobile qui est associé à un utilisateur final, comportant au moins un processeur, une mémoire et un module de communication, dans lequel l'appareil de contrôle est conçu pour
- envoyer un message de requête (A) au premier terminal (10) par l'intermédiaire d'un premier canal de communication (22) ;
- recevoir un message de réponse (B) provenant du premier terminal (10), par l'intermédiaire d'un second canal de communication (24), dans lequel le message de réponse (B) est signé par le premier terminal (10) et dans lequel le second canal de communication est soit identique au premier canal de communication, soit différent du premier canal de communication (22) ;
- vérifier le message de réponse (B) signé ; et
- confirmer l'authenticité du message de réponse (B), à condition que l'authenticité de la signature puisse être confirmée préalablement par l'appareil de contrôle ; dans lequel
- le message de requête (A) contient un nombre aléatoire de la longueur L, lequel nombre aléatoire est généré par le second terminal (12), dans lequel L>=1, et le message de réponse (B) contient une représentation du nombre aléatoire généré par le second terminal (12), laquelle représentation est cryptée avec une clé privée du premier terminal (10) ;
- le message de réponse (B) contient un certificat numérique (32) qui provient du fournisseur de services qui a créé le billet électronique ou d'une entité considérée comme fiable par le fournisseur de services ;
- le message de réponse (B) présente un billet électronique qui, outre les informations de billet, présente également un premier identifiant numérique du premier terminal (10), et en ce que le billet électronique contient une signature numérique du fournisseur de services ;
- le message de réponse (B) présente, en plus du billet électronique, un second identifiant numérique du premier terminal (10), lequel second identifiant numérique est produit par le premier terminal (10) ; et
- le second terminal (12) ne confirme l'authenticité du message de réponse (B) que si le premier identifiant contenu dans le billet électronique et le second identifiant produit par le premier terminal (10) sont identiques.

14. Appareil de contrôle selon la revendication 13, **caractérisé en ce que** le module de communication présente un module NFC, un module Bluetooth, une caméra et/ou un écran.
